# EUROPEAN PATENT APPLICATION

(11) **EP 4 635 711 A1**
(43) Date of publication of application: **22.10.2025**
(21) Application number: 23903515.7
(22) Date of filing: 12.12.2023
(51) Int. Cl.: B29C 48/395, B29C 43/18, B29C 43/36, B29C 48/25, B29C 48/32, B29C 48/80, B29C 48/86, B29C 48/255, B29C 48/475, H02K 15/02, H02K 15/12

(54) **RESIN MOLDING DEVICE, MOTOR CORE MANUFACTURING DEVICE, RESIN MOLDING METHOD, AND MOTOR CORE MANUFACTURING METHOD**

(30) Priority: 12.12.2022 JP 2022198170
(71) Applicant: NHK Spring Co., Ltd., Kanagawa 236-0004 (JP)
(72) Inventor: OHMORI, Makoto, Yokohama-shi, Kanagawa 236-0004 (JP); SATO, Kei, Yokohama-shi, Kanagawa 236-0004 (JP); FURUYA, Takumi, Yokohama-shi, Kanagawa 236-0004 (JP); KINOSHITA, Jun, Yokohama-shi, Kanagawa 236-0004 (JP)
(74) Representative: DREISS Patentanwälte PartG mbB
(86) International application number: PCT/JP2023/044479
(87) International publication number: WO 2024/128231

(57) **Abstract**

A resin molding device includes an extrusion conveyance path that allows conveyance of a powder resin composition in a conveyance direction, the powder resin composition being supplied to an upstream side in the conveyance direction and including a thermosetting resin; a screw in the extrusion conveyance path, the screw including a screw body and a fin, the screw body extending along the conveyance direction with a prescribed gap between the screw body and an inner wall surface of the extrusion conveyance path, and the fin being formed at an outer peripheral surface of the screw body; a molding device-side heater that is capable of heating the powder resin composition being conveyed along the extrusion conveyance path; a rotation device that rotates the screw in order to knead the powder resin composition while conveying the powder resin composition in the conveyance direction and to yield a resin kneaded body; and a jig that receives an annular resin material made of the resin kneaded body, which is discharged from a discharge port provided at a downstream side, in the conveyance direction, of the extrusion conveyance path.

## Description

### TECHNICAL FIELD

The present disclosure relates to a resin molding device, a motor core manufacturing device, a resin molding method, and a motor core manufacturing method.

### BACKGROUND ART

At a motor core, for example, a rotor core, in a rotating electric machine, plural slots are arranged in an annular shape with prescribed intervals therebetween. Respective permanent magnets are attached inside the slots. As a method for attaching the permanent magnets to the motor core, a method of inserting the permanent magnets into the slots, then filling in around the permanent magnets with resin, and curing the resin is known.

Japanese Patent Application Laid-Open (JP-A) No. 2019-134566 recites a matter of, when filling magnet insertion cavities of a rotor core in with a resin that serves as a filler, charging the resin in tablet form into a filler supply part (sometimes referred to as a "pot"), heating the resin, softening and fusing the resin before the filling, and then conducting the filling.

### SUMMARY OF INVENTION

### TECHNICAL PROBLEM

When a motor core itself is large, such as when the motor core is to be used in a motor mounted at a vehicle or the like, the slots are larger, the number of slots is greater, a stacking height is greater, and so forth. Accordingly a filling amount of resin is increased. When the filling amount of resin into the motor core is greater, the resin material charged into the pot must be increased proportionally. Heating means for heating the resin material is generally disposed peripherally to the pot. When the resin material is in a tablet shape (that is, a solid cylindrical shape) as in JP-A No. 2019-134566, large differences in distance from the heating means may result from the increase in the amount of resin material. Consequently, temperature differences are likely to occur, particularly between surface portions and middle portions of the resin material, and uniformly heating the whole of the resin material is difficult. Nonuniform heating of the resin material may lead to variations in the curing reaction of the resin material.

In consideration of the circumstances described above, the present disclosure provides a resin molding device, a resin molding method, a motor core manufacturing device and a motor core manufacturing method that enable uniform heating of a resin material.

### SOLUTION TO PROBLEM

A resin molding device according to a first aspect of the present disclosure includes: an extrusion conveyance path that allows conveyance of a powder resin composition in a conveyance direction, the powder resin composition being supplied to an upstream side in the conveyance direction and including a thermosetting resin; a screw in the extrusion conveyance path, the screw including a screw body and a fin, the screw body extending along the conveyance direction with a prescribed gap between the screw body and an inner wall surface of the extrusion conveyance path, and the fin being formed at an outer peripheral surface of the screw body; a molding device side heater that is capable of heating the powder resin composition being conveyed along the extrusion conveyance path; a rotation device that rotates the screw in order to knead the powder resin composition while conveying the powder resin composition in the conveyance direction and to yield a resin kneaded body; and a jig that receives an annular resin material made of the resin kneaded body, which is discharged from a discharge port provided at a downstream side, in the conveyance direction, of the extrusion conveyance path.

In the resin molding device as described above, a ring-shaped resin material that enables uniform heating may be molded. Because the resin material is annular, the resin material may be heated to a prescribed temperature in a shorter duration than when a tablet-shaped resin material is used.

In a resin molding device according to a second aspect of the present disclosure, the resin molding device according to the first aspect of the present disclosure further includes a cutting device capable of cutting the resin kneaded body discharged from the discharge port of the extrusion conveyance path.

In the resin molding device as described above, the resin kneaded body may be cut and divided at an arbitrary position. Thus, an amount of the annular resin material may be freely adjusted.

In a resin molding device according to a third aspect of the present disclosure, in the resin molding device according to the first aspect or second aspect of the present disclosure, the jig includes a ring-shaped hole portion that is connectable to the discharge port.

In the resin molding device as described above, the resin kneaded body discharged from the discharge port may be received in the jig while assuredly preserving the annular shape.

In a resin molding device according to a fourth aspect of the present disclosure, the resin molding device according to the third aspect of the present disclosure further includes a cap body capable of closing off an end portion at a downstream side, in the conveyance direction, of the ring-shaped hole portion.

In the resin molding device as described above, when the resin kneaded body is being supplied into the jig, leakage of the supplied resin kneaded body to the exterior of the jig may be prevented. The resin kneaded body may be pressurized and compacted by the resin kneaded body supplied into the jig being pressed against the cap body and the supply continuing.

In a resin molding device according to a fifth aspect of the present disclosure, the resin molding device according to the third aspect or fourth aspect of the present disclosure further includes a press device capable of pressurizing the annular resin material accommodated in the ring-shaped hole portion from a side thereof at which one end portion of the ring-shaped hole portion is disposed.

In the resin molding device as described above, the density of the annular resin material may be improved by the compression of the annular resin material in the jig. Consequently, firmness of the annular resin material may be improved and vacancies within the resin material may be decreased.

In a resin molding device according to a sixth aspect of the present disclosure, in the resin molding device according to any one of the third to fifth aspects of the present disclosure, plural projections are formed at at least one of an inner side interior wall surface or an outer side interior wall surface of the ring-shaped hole portion, the projections projecting in directions intersecting with the conveyance direction and extending in the conveyance direction.

In the resin molding device as described above, a resin material in which more of the resin material is disposed in vicinities of locations at which filling is required may be molded by the projections.

In a resin molding device according to a seventh aspect of the present disclosure, the resin molding device according to any one of the first to sixth aspects of the present disclosure further includes: a ring-shaped first aperture portion that can be communicate with the discharge port of the extrusion conveyance path; a ring-shaped second aperture portion, having at least one of an outer diameter or an inner diameter that differs from the first aperture portion; and a communicating passage that connects the first aperture portion with the second aperture portion.

In the resin molding device as described above, the outer diameter and inner diameter of the resin kneaded body may be adjusted, and size and the like of the molded annular resin material may be altered without being constrained by an inner diameter of the extrusion conveyance path and the like.

In a resin molding device according to an eighth aspect of the present disclosure, in the resin molding device according to any one of the first, second and seventh aspects of the present disclosure, a leading end portion of the screw body is configured by a closing block at which the fin is not provided, and the resin molding device further includes a moving device that moves the screw body along the conveyance direction.

In the resin molding device as described above, most of molding of the annular resin may have been completed at the distal end portion of the screw, and the shape of the jig has a higher degree of freedom.

A motor core manufacturing device according to a ninth aspect of the present disclosure includes: a resin molding device that is capable of molding an annular resin material; a mold that is capable of retaining a motor core, the motor core including plural resin fill sections provided in a ring shape at a prescribed interval; a ring-shaped chamber that is communicated with a resin fill passage formed in the mold, an end section of the resin fill passage being communicable with each of the plural resin fill sections, and the chamber being capable of accommodating the annular resin material therein; a plunger that is movable within the ring-shaped chamber; and manufacturing device side heaters disposed in the mold and at the outside circumference of the ring-shaped chamber. This resin molding device includes: an extrusion conveyance path that allows conveyance of a powder resin composition in a conveyance direction, the powder resin composition being supplied to an upstream side in the conveyance direction and including a thermosetting resin; a screw in the extrusion conveyance path, the screw including a screw body and a fin, the screw body extending along the conveyance direction with a prescribed gap between the screw body and an inner wall surface of the extrusion conveyance path, and the fin being formed at an outer peripheral surface of the screw body; a molding device side heater that is capable of heating the powder resin composition being conveyed along the extrusion conveyance path; a rotation device that rotates the screw in order to knead the powder resin composition while conveying the powder resin composition in the conveyance direction and to yield a resin kneaded body; and a jig that receives the annular resin material, the annular resin material being made of the resin kneaded body, which is discharged from a discharge port provided at a downstream side, in the conveyance direction, of the extrusion conveyance path.

In the motor core manufacturing device as described above, after the powder resin composition that is the raw material has been molded into the annular shape, the annular resin material is heated in the chamber. Therefore, there is no resin in a central region at positions far from the manufacturing device side heaters, and the resin in the chamber may be heated uniformly. Because the resin from the ring-shaped chamber fills the resin fill sections that are provided in a ring shape, resin fill passages linking the resin fill sections with the chamber may be shortened. A change in the kind of motor core that the resin is filling (for example, the core becoming larger or smaller, being the same diameter but resin filling positions being changed, and the like) may be adapted to, while keeping the resin fill passages short, by adjusting the diameter of the annular resin material. Moreover, because the resin molding device is used to mold the annular resin material, the annular resin material may be pre-heated uniformly. Because uniform heating of the resin may be implemented in the chamber, high-frequency pre-heating prior to the molding may be unnecessary or may be shortened. Because the resin material is annular, the resin material may be heated to a prescribed temperature in a shorter duration than when a tablet-shaped resin material is used.

In a motor core manufacturing device according to a tenth aspect of the present disclosure, in the motor core manufacturing device according to the ninth aspect of the present disclosure, the ring-shaped chamber is capable of accommodating the annular resin material and the jig supporting the annular resin material.

In the motor core manufacturing device as described above, there is no need to extrude the molded annular resin material from the jig, and a manufacturing process may be simplified.

In a motor core manufacturing device according to an eleventh aspect of the present disclosure, in the motor core manufacturing device according to the ninth aspect of the present disclosure: the jig comprises a ring-shaped hole portion that is connectable to the discharge port; the ring-shaped chamber is capable of accommodating the annular resin material, the jig, the jig accommodating the annular resin material in the ring-shaped hole portion, and at least a portion of an extrusion ring, a distal end portion of which is fitted into the chamber from a side thereof at which one end portion of the ring-shaped hole portion of the jig is disposed; and the extrusion ring functions as a portion of the plunger.

In the motor core manufacturing device as described above, there is no need to extrude the molded annular resin material from the jig, and the manufacturing process may be simplified. Furthermore, because the extrusion ring is used to move the softened resin toward the resin fill sections, there is no need to change the shape of the plunger to match the shape of the annular resin.

In a motor core manufacturing device according to a twelfth aspect of the present disclosure, in the motor core manufacturing device according to any one of the ninth to eleventh aspects of the present disclosure, plural projections are formed at at least one of an inner side interior wall surface or an outer side interior wall surface of the ring-shaped chamber, the projections projecting in directions intersecting the conveyance direction and extending in the conveyance direction, and the projections being formed at positions of the motor core disposed in the mold at which the resin fill sections are not provided.

In the motor core manufacturing device as described above, a resin material in which more of the resin material is disposed in vicinities of locations at which filling is required may be molded by the projections. If the projections are provided with consideration to the arrangement of the resin fill sections in the motor core and of the resin fill passages, an amount of resin cured in the chamber may be reduced, and the slot sections may be filled in with more of the resin material.

A resin molding method according to a thirteenth aspect of the present disclosure includes: starting supply of a powder resin composition into an extrusion conveyance path from an upstream side in a conveyance direction, the powder resin composition including a thermosetting resin; rotating a screw that extends along the conveyance direction in the extrusion conveyance path and kneading the powder resin composition while conveying the powder resin composition; heating an interior of the extrusion conveyance path in order to fuse at least a portion of the powder resin composition being conveyed in the extrusion conveyance path and to yield a resin kneaded body; connecting one end of a ring-shaped hole portion of a jig with a discharge port, the discharge port being provided at a downstream side, in the conveyance direction, of the extrusion conveyance path, and the jig including the ring-shaped hole portion; supplying the resin kneaded body through the discharge port into the ring-shaped hole portion; and, when a prescribed amount of the resin kneaded body has been supplied into the ring-shaped hole portion, cutting the resin kneaded body between the discharge port of the extrusion conveyance path and the ring-shaped hole portion and molding an annular resin material.

In the resin molding method as described above, a ring-shaped resin material that enables uniform heating may be molded. Moreover, in the process of molding the annular resin material, the annular resin material may be pre-heated uniformly. Because uniform heating of the resin may be implemented in the chamber, high-frequency pre-heating prior to the molding may be unnecessary or may be shortened.

In a resin molding method according to a fourteenth aspect of the present disclosure, the resin molding method according to the thirteenth aspect of the present disclosure further includes pressurizing and compressing the annular resin material in the ring-shaped hole portion in a direction along the conveyance direction.

In the resin molding method as described above, the density of the annular resin material may be improved by the compression of the annular resin material in the jig. Consequently, firmness of the annular resin material may be improved and vacancies within the resin material may be decreased.

In a resin molding method according to a fifteenth aspect of the present disclosure, the resin molding method according to the thirteenth aspect or fourteenth aspect of the present disclosure further includes pressurizing the annular resin material in the ring-shaped hole portion in a direction along the conveyance direction and extruding the annular resin material out ward from the jig.

In the resin molding method as described above, the annular resin material may be provided as a single body.

A motor core manufacturing method according to a sixteenth aspect of the present disclosure includes: starting supply of a powder resin composition into an extrusion conveyance path from an upstream side in a conveyance direction, the powder resin composition including a thermosetting resin; rotating a screw that extends along the conveyance direction in the extrusion conveyance path and kneading the powder resin composition while conveying the powder resin composition; heating an interior of the extrusion conveyance path in order to fuse at least a portion of the powder resin composition being conveyed in the extrusion conveyance path and to yield a resin kneaded body; closing a discharge port provided at a downstream side, in the conveyance direction of the extrusion conveyance path; when a prescribed amount of the resin kneaded body has been supplied into a ring-shaped cavity provided between a distal end position of the screw and the extrusion conveyance path, opening the discharge port and moving the screw so as to discharge a distal end portion of the screw through the discharge port together with the resin kneaded body surrounding the distal end portion; and cutting the resin kneaded body that has been discharged from the extrusion conveyance path through the discharge port together with the screw at a position in a vicinity of the discharge port and molding an annular resin material.

In the resin molding method as described above, a ring-shaped resin material that enables uniform heating may be molded. Moreover, in the process of molding the annular resin material, the annular resin material may be pre-heated uniformly. Because uniform heating of the resin may be implemented in the chamber, high-frequency pre-heating prior to the molding may be unnecessary or may be shortened. Because the resin material is annular, the resin material may be heated to a prescribed temperature in a shorter duration than when a tablet-shaped resin material is used.

A motor core manufacturing method according to a seventeenth aspect of the present disclosure includes: starting supply of a powder resin composition into an extrusion conveyance path from an upstream side in a conveyance direction, the powder resin composition including a thermosetting resin; rotating a screw that extends along the conveyance direction in the extrusion conveyance path and kneading the powder resin composition while conveying the powder resin composition; heating an interior of the extrusion conveyance path in order to fuse at least a portion of the powder resin composition being conveyed in the extrusion conveyance path and to yield a resin kneaded body; connecting one end of a ring-shaped hole portion of a jig with a discharge port, the discharge port being provided at a downstream side, in the conveyance direction, of the extrusion conveyance path, and the jig including the ring-shaped hole portion; supplying the resin kneaded body through the discharge port into the ring-shaped hole portion; when a prescribed amount of the resin kneaded body has been supplied into the ring-shaped hole portion, cutting the resin kneaded body between the discharge port of the extrusion conveyance path and the ring-shaped hole portion and molding an annular resin material; charging the molded annular resin material into a ring-shaped chamber; retaining a motor core including plural resin fill sections in a mold such that an end section of a resin fill passage is communicated with the plurality of resin fill sections, the resin fill passage being formed in the mold and being communicated with the ring-shaped chamber, and the plural resin fill sections being provided in a ring shape at a prescribed interval; heating and softening the annular resin material in the ring-shaped chamber; activating a plunger that is movable within the ring-shaped chamber and filling the plurality of resin fill sections with a soft resin formed of the annular resin material softened in the ring-shaped chamber; and curing the soft resin that has been filled into the plurality of resin fill sections.

In the motor core manufacturing method as described above, after the resin material that is the raw material has been molded into the annular shape, the annular resin material is heated in the chamber. Therefore, there is no resin in a central region at positions far from a manufacturing device side heater, and the resin in the chamber may be heated uniformly. Because the resin from the ring-shaped chamber fills the resin fill sections that are provided in a ring shape, the resin fill passages linking the resin fill sections with the chamber may be shortened. Accordingly, the slot sections may be filled in with more of the resin material than in a conventional method.

In a motor core manufacturing method according to an eighteenth aspect of the present disclosure, in the motor core manufacturing method according to the seventeenth aspect of the present disclosure, the charging the molded annular resin material into the ring-shaped chamber includes charging the annular resin material and the jig into the ring-shaped chamber, the jig accommodating the annular resin material therein.

In the motor core manufacturing method as described above, there is no need to extrude the molded annular resin from the jig, and the manufacturing process may be simplified.

In a motor core manufacturing method according to a nineteenth aspect of the present disclosure, in the motor core manufacturing method according to the seventeenth aspect of the present disclosure: the charging the molded annular resin material into the ring-shaped chamber includes charging the annular resin material, the jig, the jig accommodating the annular resin material therein, and an extrusion ring, a distal end portion of which is fitted into the chamber from a side thereof at which one end portion of the ring-shaped hole portion of the jig is disposed; and the extrusion ring is a portion of the plunger and operates to fill in the plurality of resin fill sections with the soft resin.

In the motor core manufacturing method as described above, there is no need to extrude the molded annular resin from the jig, and the manufacturing process may be simplified. Furthermore, because the extrusion ring is used to move the softened resin toward the resin fill sections, there is no need to change the shape of the plunger to match the shape of the annular resin.

A motor core manufacturing method according to a twentieth aspect of the present disclosure includes: starting supply of a powder resin composition into an extrusion conveyance path from an upstream side in a conveyance direction, the powder resin composition including a thermosetting resin; rotating a screw that extends along the conveyance direction in the extrusion conveyance path and kneading the powder resin composition while conveying the powder resin composition; heating an interior of the extrusion conveyance path in order to fuse at least a portion of the powder resin composition being conveyed in the extrusion conveyance path and to yield a resin kneaded body; closing a discharge port provided at a downstream side, in the conveyance direction, of the extrusion conveyance path; when a prescribed amount of the resin kneaded body has been supplied into a ring-shaped cavity provided between a distal end position of the screw and the extrusion conveyance path, opening the discharge port and moving the screw so as to discharge a distal end portion of the screw through the discharge port together with the resin kneaded body surrounding the distal end portion; cutting the resin kneaded body that has been discharged out of the extrusion conveyance path through the discharge port along with the screw at a position near the discharge port for molding an annular resin material; charging the molded annular resin material into a ring-shaped chamber; retaining a motor core including a plurality of resin fill sections in a mold such that an end section of a resin fill passage is communicated with the plurality of resin fill sections, the resin fill passage being formed in the mold and being communicated with the ring-shaped chamber, and the plurality of resin fill sections being provided in a ring shape at a prescribed interval; heating and softening the annular resin material in the ring-shaped chamber; activating a plunger that is movable within the ring-shaped chamber and filling the plurality of resin fill sections with a soft resin formed of the annular resin material softened in the ring-shaped chamber; and curing the soft resin that has been filled into the plurality of resin fill sections.

In the motor core manufacturing method as described above, after the resin material that is the raw material has been molded into the annular shape, the annular resin material is heated in the chamber. Therefore, there is no resin in a central region at positions far from a manufacturing device side heater, and the resin in the chamber may be heated uniformly. Because the resin from the ring-shaped chamber fills the resin fill sections that are provided in a ring shape, the resin fill passages linking the resin fill sections with the chamber may be shortened. Accordingly, the slot sections may be filled in with more of the resin material than in a conventional method.

### ADVANTAGEOUS EFFECTS OF INVENTION

According to the resin manufacturing device and resin manufacturing method of the present disclosure, a resin that enables uniform heating of a resin material may be provided. According to the motor core manufacturing device and motor core manufacturing method of the present disclosure, the resin of the resin material that is uniformly heated may be used to reliably manufacture a motor core.

### BRIEF DESCRIPTION OF DRAWINGS

Fig. 1 is a schematic descriptive diagram showing an example of a resin molding device according to an exemplary embodiment of the present disclosure.
Fig. 2A is an operation description diagram showing an example of an operation state of the resin molding device shown in Fig. 1.
Fig. 2B is an operation description diagram showing an example of another operation state of the resin molding device shown in Fig. 1.
Fig. 3A is an operation description diagram showing an example of a compressing and extruding operation of a resin material in a jig shown in Fig. 1.
Fig. 3B is an operation description diagram showing the example of the compressing and extruding operation of the resin material in the jig shown in Fig. 1.
Fig. 3C is an operation description diagram showing the example of the compressing and extruding operation of the resin material in the jig shown in Fig. 1.
Fig. 3D is an operation description diagram showing the example of the compressing and extruding operation of the resin material in the jig shown in Fig. 1.
Fig. 4 is a description diagram showing a state in which a diameter changing jig is employed at the resin molding device shown in Fig. 1.
Fig. 5 is a flowchart showing an example of a resin molding method according to the exemplary embodiment of the present disclosure.
Fig. 6 is a schematic descriptive diagram showing an example of a motor core manufacturing device according to the exemplary embodiment of the present disclosure.
Fig. 7A is a schematic perspective view showing an example of a rotor core to be employed in the motor core manufacturing device shown in Fig. 6.
Fig. 7B is a schematic perspective view showing an example of an annular resin material to be employed in the motor core manufacturing device shown in Fig. 6.
Fig. 8 is a flowchart showing an example of a motor core manufacturing method according to the exemplary embodiment of the present disclosure.
Fig. 9 is an operation description diagram showing an example of an operation state of the motor core manufacturing device shown in Fig. 6.
Fig. 10 is an operation description diagram showing an example of another operation state of the motor core manufacturing device shown in Fig. 6.
Fig. 11 is an operation description diagram showing an example of another operation state of the motor core manufacturing device shown in Fig. 6.
Fig. 12 is an operation description diagram showing an example of another operation state of the motor core manufacturing device shown in Fig. 6.
Fig. 13A is a schematic sectional diagram showing an example of a charged member that can be charged into a chamber.
Fig. 13B is a schematic sectional diagram showing an alternative example of the charged member that can be charged into the chamber.
Fig. 14 is a diagram showing a state, corresponding with Fig. 9, of a motor core manufacturing device according to a variant example into which the charged member shown in Fig. 13A can be charged.
Fig. 15 is a diagram showing a state, corresponding with Fig. 9, of a motor core manufacturing device according to an alternative variant example into which the charged member shown in Fig. 13B can be charged.
Fig. 16A is a descriptive diagram for describing a variant example of a first charged member.
Fig. 16B is a descriptive diagram for describing the variant example of the first charged member.
Fig. 17 is a diagram showing a state, corresponding with Fig. 9, of a motor core manufacturing device according to an alternative variant example of the motor core manufacturing device shown in Fig. 6.
Fig. 18 is a diagram showing a state in which a lower mold of the motor core manufacturing device shown in Fig. 17 is lowered.
Fig. 19 is a schematic descriptive diagram showing an example of a resin molding device according to a variant example of the exemplary embodiment of the present disclosure.
Fig. 20A is an operation description diagram showing an example of an operation state of the resin molding device shown in Fig. 19.
Fig. 20B is an operation description diagram showing an example of another operation state of the resin molding device shown in Fig. 19.
Fig. 20C is an operation description diagram showing an example of another operation state of the resin molding device shown in Fig. 19.
Fig. 21 is a flowchart showing an example of a resin molding method according to a variant example of the exemplary embodiment of the present disclosure.

### DETAILED DESCRIPTION

This application is based on Patent Application No. 2022-198170 filed in Japan on December 12, 2022, the contents of which form a part of the contents of this application.

The present disclosure will be more fully understood from the following detailed descriptions. Scope of application of the present application will become more apparent from the detailed descriptions below. However, the detailed descriptions and specific examples are preferred embodiments of the present disclosure and are described for the purpose of explanation only. From these detailed descriptions, numerous changes and modifications within the spirit and scope of the present disclosure will be apparent to those skilled in the art.

The applicants have no intention of dedicating any of the described embodiments to the public; all disclosed modifications and alternatives, including those that may not literally fall within the scope of the claims, are intended to be part of the invention under the doctrine of equivalents.

Below, exemplary embodiments for carrying out the present disclosure are described with reference to the drawings. A scope required for explanation to achieve the object of the present disclosure is illustrated in a schematic manner. Scopes required for explanation of the relevant parts of the present disclosure are principally explained, and parts for which explanations are omitted will be based on publicly known technology. The same or similar reference symbols are used for members that are the same or equivalent in the drawings, and duplicative descriptions are omitted. Where plural members that are the same as or equivalent to one another are included in one drawing, reference symbols may be attached to only some of those members to aid viewing of the drawings.

### - Resin molding device -

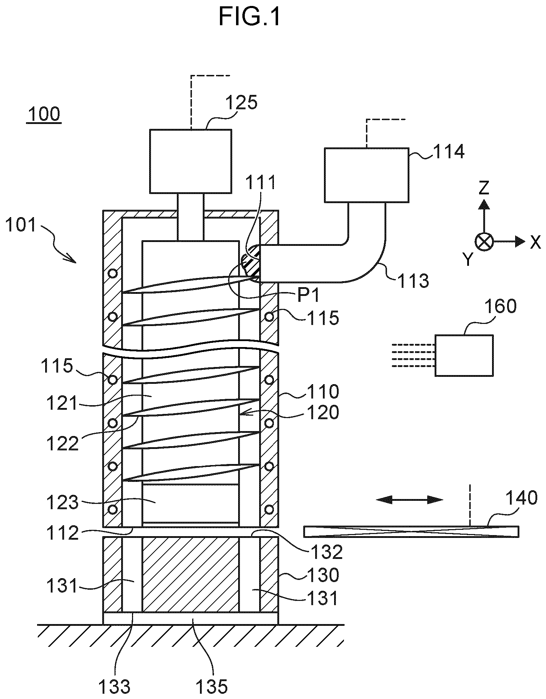

Fig. 1 is a schematic descriptive diagram showing an example of a resin molding device according to an exemplary embodiment of the present disclosure. A resin molding device 100 according to the present exemplary embodiment is a molding device that may be used at a motor core manufacturing device, which is described below, and is capable of molding an annular resin material P. As shown in Fig. 1, the resin molding device 100 principally includes an extruder 101 and a jig 130. To aid understanding, in the descriptions below the direction X indicated in Fig. 1 may be described as a left-and-right direction, the direction Y may be described as a front-and-rear direction, and the direction Z may be described as a height direction (or vertical direction).

An extrusion device (also referred to as an extruder) 101 extends in one direction, for example, a vertical direction. While kneading a powder resin composition P1 that is supplied to a conveyance direction upstream side, that is, the upper side, the extruder 101 conveys the powder-form resin composition P1 to the conveyance direction downstream side, that is, the lower side. The extruder 101 includes at least a barrel 110 that is an example of an extrusion conveyance path, a barrel heater 115 that is an example of a molding device side heater, a screw 120, and a motor 125 that is an example of a rotation device. The barrel 110 extends in the vertical direction and the powder resin composition P1 is conveyed inside the barrel 110. The barrel heater 115 is capable of heating the powder resin composition P1. The screw 120 extends along the conveyance direction within the barrel 110. The motor 125 rotates the screw 120.

The barrel 110 forms a conveyance path that conveys the powder resin composition P1 supplied to the conveyance direction upstream side in the conveyance direction while kneading the powder resin composition P1. The barrel 110 according to the present exemplary embodiment may be structured by a circular tube-shaped member of which one end portion is closed and the other end portion is open. A supply port 111 is formed at the one end portion at the conveyance direction upstream side of the barrel 110. The powder resin composition P1 is supplied through the supply port 111. A discharge port 112 is formed at the other end portion at the conveyance direction downstream side of the barrel 110. A resin composition supply path 113 is connected to the supply port 111, and a resin composition supply source 114 is connected to the resin composition supply path 113. The present exemplary embodiment illustrates an example in which the conveyance direction in the barrel 110 extends in the vertical direction, but the conveyance direction in the barrel 110 is not limited thus. For example, the conveyance direction may extend diagonally downward, and may extend in the left-and-right direction or the front-and-rear direction.

A powder resin composition P1 that may be supplied through the supply port 111 into the barrel 110 and utilized principally includes a thermosetting resin that is an epoxy resin, a phenol resin, an unsaturated polyester resin or a cyanate resin. In addition to the thermosetting resin composition, a curing agent, a filler and the like may be added to the powder resin composition P1.

The meaning of the term "powder resin composition P1" as used herein is intended to include a resin composition that is formed of relatively small particles, meaning powder or grains (encompassing particles such as chips obtained by pulverizing or crushing relatively large resin blocks). The resin composition supplied through the supply port 111 is not necessarily all in powder form. As a specific example, at least a portion of the resin composition may be in a paste form or clay form.

The barrel heater 115 is capable of heating the powder resin composition P1 being conveyed in the barrel 110. The barrel heater 115 may be structured by a widely known heater, for example, an infrared heater, a sheath heater or the like. The barrel heater 115 is disposed, for example, inside the barrel 110 so as to surround substantially the whole of the conveyance path in the barrel 110.

The barrel heater 115 heats the powder resin composition P1 being conveyed in the barrel 110 to a temperature high enough that at least a portion of the powder resin composition P1 is fused and the particles adhere to one another. More preferably, the powder resin composition P1 heated by the barrel heater 115 is heated to a prescribed temperature that is higher than a fusing temperature but lower than a curing temperature. Accordingly, the extruder 101 also includes a temperature sensor that detects temperatures of the powder resin composition P1 being conveyed in the barrel 110 or temperatures within the barrel 110.

The screw 120 conveys the powder resin composition P1 supplied through the supply port 111 toward the discharge port 112 in the barrel 110 while kneading the powder resin composition P1. The screw 120 includes a screw body 121 and a fin 122. The screw body 121 extends along the conveyance direction in a state in which a prescribed gap is formed between the screw body 121 and an inner wall face of the barrel 110. The fin 122 is formed at an outer peripheral surface of the screw body 121.

The screw body 121 is formed in, for example, a circular rod shape that is provided with an outer diameter smaller than an inner diameter of the barrel 110. The motor 125 is attached to a base end portion of the screw body 121. A distal end portion of the screw body 121 is disposed in a vicinity of the discharge port 112. A closing block 123, at which the fin 122 is not provided, is formed at the distal end portion of the screw body 121. The closing block 123 is formed in a circular rod shape that extends to a position substantially the same as the discharge port 112. The closing block 123 functions to aid formation of a resin kneaded body P2 that is discharged from the discharge port 112 into a ring shape.

The fin 122 may be structured as a projection that is provided standing from the outer peripheral surface of the screw body 121 in a direction intersecting the axial direction of the screw body 121. The fin 122 may be formed as one or a plural number of projections formed helically at the outer peripheral surface of the screw body 121. A height in a height direction of a distal end portion of the fin 122 is adjusted so as to touch the inner peripheral surface of the barrel 110 or oppose the inner peripheral surface of the barrel 110 with a small gap therebetween. When the screw 120 rotates, the fin 122 kneads the powder resin composition P1 that is supplied between the inner wall surface of the barrel 110 and the screw body 121 while pushing the powder resin composition P1 in the conveyance direction.

The motor 125 connected to the base end portion of the screw body 121 rotates the screw 120 at an arbitrary rotation speed. Thus, the powder resin composition P1 in the barrel 110 is conveyed while being kneaded, and the resin kneaded body P2 may be molded. The motor 125 may, by controlling the rotation speed of the screw 120, control supply amounts of the resin material in the barrel 110. That is, a supply amount of the resin kneaded body P2 that is discharged from the discharge port 112 may be precisely regulated by control of the rotation speed of the motor 125.

According to the extruder 101 provided with the structure described above, the powder resin composition P1 supplied to the supply port 111 of the barrel 110 may be conveyed while being heated and kneaded by the operations of the screw 120 and the barrel heater 115. The powder resin composition P1 conveyed in the barrel 110 is kneaded by heat from the barrel heater 115 and a kneading action by the screw 120, and is discharged from the discharge port 112 as the resin kneaded body P2 in which particles are adhered to one another.

In the extruder 101 described above, the barrel 110 is formed in a circular tube shape and the screw body 121 and closing block 123 disposed in the barrel 110 are formed in circular rod shapes that extend coaxially with the barrel 110. As a result, the resin kneaded body P2 discharged from the extruder 101 is formed in a ring shape with an outer diameter substantially the same as an inner diameter of the barrel 110 and with an inner diameter substantially the same as the outer diameter of the screw body 121. Because the resin kneaded body P2 is discharged through the discharge port 112 of the extruder 101 in the ring shape, the resin molding device 100 according to the present exemplary embodiment may easily mold the annular resin material P with an arbitrary outer diameter and inner diameter.

The jig 130 receives the annular resin material P that is made of the resin kneaded body P2 discharged from the discharge port 112 of the barrel 110. In the present exemplary embodiment, the jig 130 is a jig that is capable of molding the resin kneaded body P2 supplied from the extruder 101 described above into the annular resin material P. Accordingly, the jig 130 includes a ring-shaped hole portion 131 that may be connected with the discharge port 112 of the barrel 110.

The ring-shaped hole portion 131 may be structured by a ring-shaped gap of which one end portion is a feed-in port 132 that is connectable with the discharge port 112. The ring-shaped hole portion 131 accommodates the resin kneaded body P2 discharged from the discharge port 112. Therefore, an outer diameter of the ring-shaped hole portion 131 may be substantially the same as or greater than the inner diameter of the barrel 110, and an inner diameter of the ring-shaped hole portion 131 may be substantially the same as or less than outer diameters of the screw body 121 and the closing block 123. Because the resin kneaded body P2 accommodated in the ring-shaped hole portion 131 forms the annular resin material P, the inner diameter and outer diameter of the ring-shaped hole portion 131 may be adjusted to match the shape of a chamber 30 of a motor core manufacturing device 1, which is described below. Therefore, the inner diameter of the barrel 110 and the inner diameters of the screw body 121 and the closing block 123 may be specified to suit the shape of the chamber 30 of the motor core manufacturing device 1.

The jig 130 also includes a cap body 135 that is provided at a face of the jig 130 at the opposite side thereof from a face at which the feed-in port 132 is formed. The cap body 135 closes off a conveyance direction downstream side end portion 133 of the ring-shaped hole portion 131. The cap body 135 may cover the whole of the lower face of the jig 130, as illustrated in Fig. 1, or may be formed in an annular shape similar to the ring-shaped hole portion 131 and pressed into the lower side of the ring-shaped hole portion 131 to close off the lower face. The cap body 135 may prevent the resin kneaded body P2 that is fed in through the feed-in port 132 from leaving the jig 130 through the end portion 133 that is disposed at the opposite side of the jig 130 from the side at which the feed-in port 132 is disposed.

Because the cap body 135 is provided, continually feeding in the resin kneaded body P2 in a state in the which the resin kneaded body P2 fed into the ring-shaped hole portion 131 is in contact with the cap body 135 may pressurize and compress the resin kneaded body P2 within the ring-shaped hole portion 131. As a result, an amount, shape and the like of the resin kneaded body P2 accommodated in the ring-shaped hole portion 131 may be made consistent. The above compression operation is not required, and the cap body 135 may be omitted if there is no risk of the resin kneaded body P2 supplied into the ring-shaped hole portion 131 subsequently falling down from the ring-shaped hole portion 131.

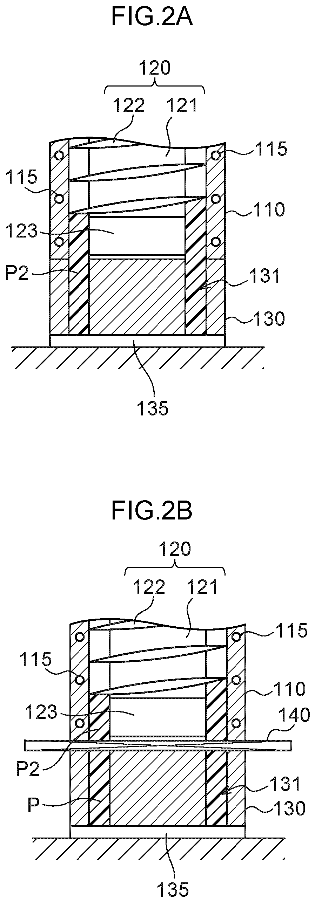

Fig. 2A and Fig. 2B are operation description diagrams showing examples of operation states of the resin molding device shown in Fig. 1. Fig. 2A shows a state in which the jig 130 is filled with the resin kneaded body P2, and Fig. 2B shows a state in which the resin kneaded body is cut by a cutter. The resin molding device 100 according to the present exemplary embodiment may include, in addition to the structures described above, a cutter 140 that is an example of a cutting device, which cuts the resin kneaded body P2 discharged from the discharge port 112 of the barrel 110. The cutter 140 is provided to be insertable between the discharge port 112 and the feed-in port 132.

When the cutter 140 is activated at an arbitrary timing, for example, a timing at which the interior of the ring-shaped hole portion 131 is filled with a prescribed amount of the resin kneaded body P2 (for example, the state shown in Fig. 2A), the cutter 140 nay cut the resin kneaded body P2 at a position between the discharge port 112 and the feed-in port 132 (see Fig. 2B). After cutting the resin kneaded body P2, if the cutter 140 is retained at the position between the discharge port 112 and the feed-in port 132, unintended discharge of the resin kneaded body P2 may be suppressed while the jig 130 is being exchanged or the like.

The present exemplary embodiment illustrates an example in which the cutter 140 is used to cut the resin kneaded body P2 but the present disclosure is not limited to this structure, provided the resin kneaded body P2 may be divided at an arbitrary position. As a more specific example, the barrel 110 and jig 130 may be relatively moved in a horizontal direction and the resin kneaded body P2 may be cut by shearing forces at the end portions of the discharge port 112 and feed-in port 132. Below, the resin kneaded body P2 that has been divided from the extruder 101 by the cutter 140 is referred to as "the annular resin material P".

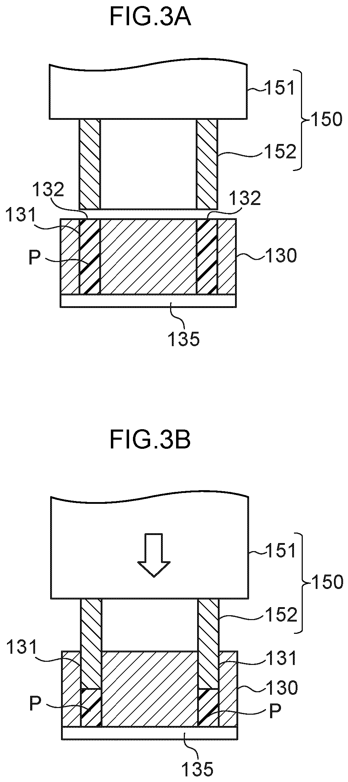

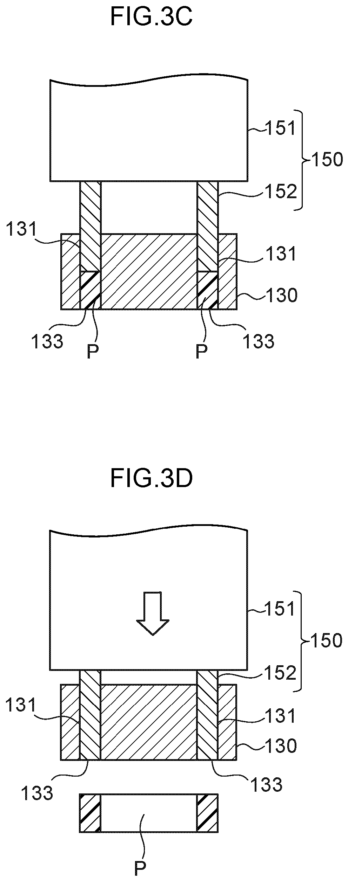

Fig. 3A to Fig. 3D are operation description diagrams showing an example of the compressing and extruding operation of the resin material in the jig shown in Fig. 1. In more detail, Fig. 3A shows a state before activation of a press device, Fig. 3B shows a state, after the state in Fig. 3A, in which the press device is activated and compresses the resin kneaded body, Fig. 3C shows a state in which the cap body is removed from the jig in the state in Fig. 3B, and Fig. 3D shows a state, after the state shown in Fig. 3C, in which the annular resin material has been extruded out of the jig. As shown in Fig. 3A to Fig. 3D, in addition to the structures described above, the resin molding device 100 according to the present exemplary embodiment may include a press device 150 that is capable of pressurizing the annular resin material P accommodated in the ring-shaped hole portion 131 from the side thereof at which one end portion of the ring-shaped hole portion 131 is disposed.

The press device 150 includes a press device body 151 and a ring-shaped extrusion ring 152. The press device body 151 is movable in the direction of extension of the ring-shaped hole portion 131, for example, the vertical direction. The extrusion ring 152 is attached to one end portion of the press device body 151 and is insertable into the ring-shaped hole portion 131. A widely known press that is vertically movable may be employed for the press device body 151, for example, a slide of a mechanical press. The extrusion ring 152 may be structured by a member with a shape that matches the outer diameter and inner diameter of the ring-shaped hole portion 131. More preferably, the extrusion ring 152 is formed in a shape that fits without gaps into the ring-shaped hole portion 131, through the feed-in port 132 of the ring-shaped hole portion 131, when the press device 150 is activated.

When the press device 150 is used to compress the annular resin material P in the ring-shaped hole portion 131, firstly the jig 130 including the cap body 135 is disposed below the press device 150 (see Fig. 3A). Then the press device 150 is operated to the lower direction, the extrusion ring 152 fits into the ring-shaped hole portion 131 through the feed-in port 132, and the extrusion ring 152 compresses the annular resin material P in the ring-shaped hole portion 131 from the upper side (see Fig. 3B). When this compression is performed, the density of the annular resin material P increases. Therefore, firmness of the annular resin material P may be improved and vacancies within the annular resin material P may be decreased. Handling of the annular resin material P becomes easier with the improvement in firmness.

When the press device 150 is operated further, the press device 150 may extrude the annular resin material P from the jig 130. At this time, first, the cap body 135 is removed from the jig 130 (see Fig. 3C). Subsequently, the jig 130 is supported by supporting means, which is not shown in the drawings, and when the press device 150 is operated further in the lower direction, the annular resin material P may be separated from the jig 130 (see Fig. 3D). The present exemplary embodiment illustrates an example in which the annular resin material P is separated from the jig 130 and deployed. However, the annular resin material P may be deployed in the motor core manufacturing device that is described below while still accommodated in the jig 130. This is described in more detail below.

The resin molding device 100 according to the present exemplary embodiment includes a molding device side control device 160 for controlling the various structural elements described above. The molding device side control device 160 is equipment that is electronically connected to the structural elements of the resin molding device 100 described above and is capable of conducting arbitrary manufacturing steps by controlling operations of the resin molding device 100. The molding device side control device 160 may, for example, be connected to the structural elements to be capable of communications by wired or wireless communications, as depicted by the dotted lines in Fig. 1. The molding device side control device 160 may be realized using a sequencer (a programmable logic controller (PLC)), a widely known computer or the like. The molding device side control device 160 may be constituted by just one of these computers and such or by a plural combination of the same.

By operating the structural elements described above, the molding device side control device 160 may implement a resin molding method according to the present exemplary embodiment, which is described below. Accordingly, the resin molding method according to the present exemplary embodiment may be provided to a computer constituting the molding device side control device 160 in the form of a program of software or the like that contains commands for conducting prescribed operations, or in the form of a non-transitory recording medium storing the program, or in the form of an application program provided via a network or the like. Details of the resin molding method according to the present exemplary embodiment are described below.

The resin molding device 100 according to the exemplary embodiment described above illustrates an example in which the inner diameters and outer diameters of the discharge port 112 and the feed-in port 132 are adjusted so as to broadly match up. However, in the motor core manufacturing device 1 in which the annular resin material P is employed, sizes of a motor core to be filled with resin, for example, a rotor core 2, may be variously altered. Therefore, it is preferable if the outer diameter and inner diameter of the annular resin material molded by the resin molding device 100 can be altered easily. Accordingly, an example of a structure for altering resin diameters that is employed at the resin molding device 100 according to the present exemplary embodiment is described below.

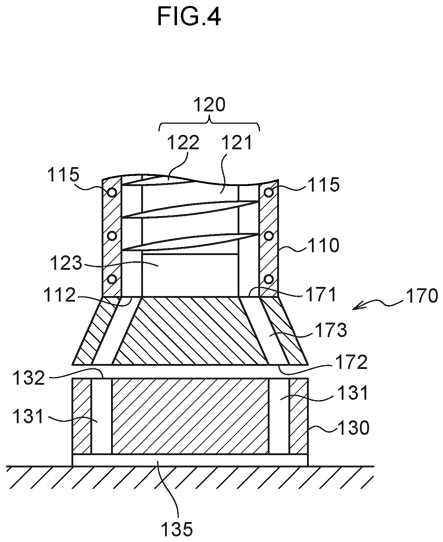

Fig. 4 is a description diagram showing a state in which a diameter changing jig is employed at the resin molding device shown in Fig. 1. As shown in Fig. 4, the resin molding device 100 according to the present exemplary embodiment may include a diameter changing jig 170 for changing the diameters of the resin kneaded body P2 extruded from the discharge port 112. This diameter changing jig 170 includes a first aperture portion 171 in a ring shape, a second aperture portion 172 and a communicating passage 173. The first aperture portion 171 may be put in communication with the discharge port 112 of the barrel 110. The second aperture portion 172 is formed in a ring shape, at least one of the outer diameter and inner diameter of which is different from the first aperture portion 171. The communicating passage 173 connects the first aperture portion 171 with the second aperture portion 172. The second aperture portion 172 may be put in communication with the feed-in port 132 of the ring-shaped hole portion 131.

The inner diameters and outer diameters of the first aperture portion 171 and second aperture portion 172 of the diameter changing jig 170 are different. Therefore, the diameter changing jig 170 may connect between the discharge port 112 and the feed-in port 132 that have different outer diameters and inner diameters. When diameter changing jigs 170 with this structure are used, one of the extruder 101 may be used to easily mold annular resin materials P with different outer diameters and inner diameters. The diameter changing jig 170 is preferably provided in the form of an attachment for the extruder 101. Accordingly, plural different kinds of the diameter changing jig 170 with different shapes of the first aperture portion 171 and the second aperture portion 172 may be prepared and may be selectively attached to the extruder 101 and employed to suit the annular resin material P that is being molded and the jig 130 that is being used.

The shape of the annular resin material P molded by the resin molding device 100 may be changed regardless of the shape of the discharge port 112 of the barrel 110 by, for example, using the diameter changing jig 170 described above. This change may be also be implemented without using the diameter changing jig 170. For example, the jig may be prepared initially with one or both of the outer diameter and inner diameter of the ring-shaped hole portion being larger than the outer diameter and/or inner diameter of the discharge port 112 of the barrel 110. Then, after the resin kneaded body P2 is fed into the ring-shaped hole portion of this jig and is cut, when the resin kneaded body P2 is compressed by the press device 150, the annular resin material P in the ring-shaped hole portion 131 may be expanded in the diameter direction within the ring-shaped hole portion 131 and the shape of the annular resin material P may be changed.

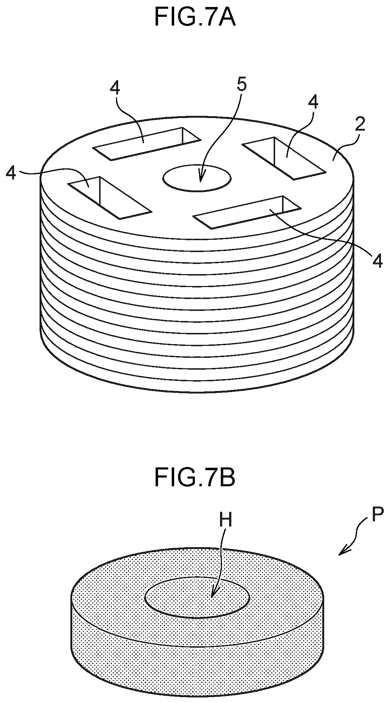

According to the resin molding device 100 according to the present exemplary embodiment as described above, the annular resin material P may be molded with a desired size from the powder resin composition P1 that is the raw material. Because a penetrating hole H (see Fig. 7B) is formed in a central portion of the annular resin material P that is molded, local temperature differences are unlikely to arise during fusing and softening, and uniform heating may be implemented.

Now, the resin molding method according to the present exemplary embodiment is described. In the descriptions of the resin molding method below, a situation in which the resin molding device 100 described above is used to manufacture the annular resin material P is described as an example, but this method may be implemented using a device other than the resin molding device 100.

### - Resin molding method -

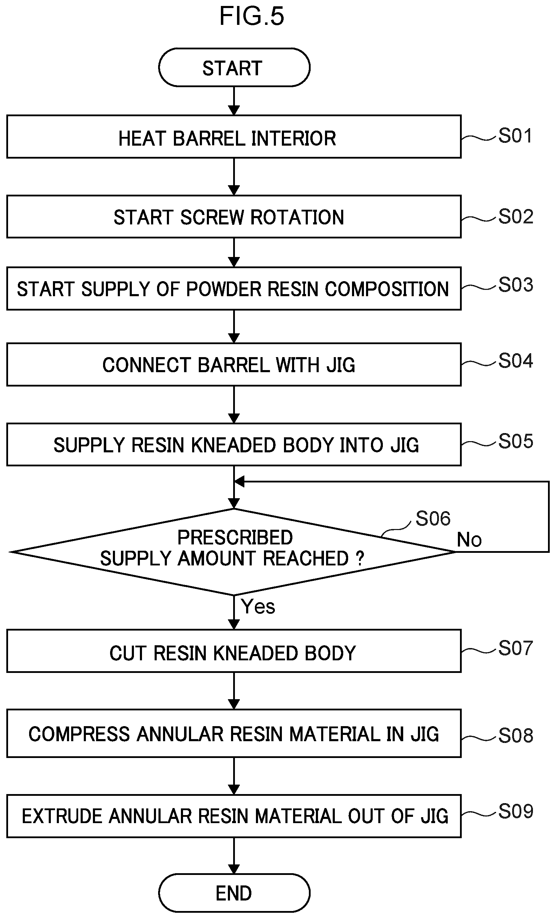

Fig. 5 is a flowchart showing an example of the resin molding method according to the exemplary embodiment of the present disclosure. The resin molding method according to the present exemplary embodiment includes at least: a step of starting supply of the powder resin composition P1 into the barrel 110 from the conveyance direction upstream side (corresponding to step S03 described below); a step of rotating the screw 120 that extends along the conveyance direction in the barrel 110 and conveying while kneading the powder resin composition P1; a step of heating the interior of the barrel 110 in order to fuse at least a portion of the powder resin composition P1 being conveyed in the barrel 110 and yield the resin kneaded body P2 (corresponding to step S01 described below); a step of connecting one end of the ring-shaped hole portion 131 of the jig 130 that is provided with the ring-shaped hole portion 131 to the discharge port 112 provided at the conveyance direction downstream side of the barrel 110 (corresponding to step S04 described below); a step of supplying the resin kneaded body P2 from the discharge port 112 into the ring-shaped hole portion 131 (corresponding to step S05 and so forth described below); a step of, when a prescribed amount of the resin kneaded body P2 has been supplied into the ring-shaped hole portion 131 (corresponding to step S06 described below), cutting the resin kneaded body P2 between the discharge port 112 of the barrel 110 and the ring-shaped hole portion 131 and molding the annular resin material P (corresponding to step S07 to step S09 described below). These are described in detail below.

To describe the resin molding method according to the present exemplary embodiment in more detail, first, the barrel heater 115 is activated and starts heating of the interior of the barrel 110 (step S01). Then, the motor 125 is activated and starts rotation operation of the screw 120 (step S02). Correspondingly, the resin composition supply source 114 is activated and starts supplying the powder resin composition P1 to the supply port 111 of the barrel 110 (step S03). Due to the rotation operation of the screw 120 and heat from the barrel heater 115 mentioned above, the powder resin composition P1 supplied to the supply port 111 is kneaded while being conveyed, and at least a portion of the powder resin composition P1 is fused, yielding the resin kneaded body P2.

The barrel 110 and jig 130 are connected (step S04) in order to feed the resin kneaded body P2 into the jig 130. In more detail, the discharge port 112 of the barrel 110 and the feed-in port 132 of the jig 130 are connected (see Fig. 2A). For this connection operation to be conducted smoothly, the jigs 130 may be successively connected to the barrel 110 using conveying means that is not shown in the drawings, such as a conveyor, a cylinder, a multiaxial robot or the like. The order of steps S01 to S04 described above may be altered as appropriate.

When a predetermined duration has passed after the completion of steps S01 to S04 described above, the resin kneaded body P2 being conveyed in accordance with the rotation of the screw 120 is discharged from the discharge port 112 and the supply of the resin kneaded body P2 into the ring-shaped hole portion 131 of the jig 130 is started (step S05). When the supply amount of the resin kneaded body P2 into the ring-shaped hole portion 131 reaches the prescribed supply amount ("Yes" in step S06), the cutter 140 is inserted between the discharge port 112 and the feed-in port 132 as shown in Fig. 2B and cuts the resin kneaded body P2 (step S07). The annular resin material P may be yielded in the ring-shaped hole portion 131 by step S07.

The jig 130 accommodating the annular resin material P therein as a result of the cutting may, for example, be moved to a position corresponding with the press device 150 (see Fig. 3A), using conveying means that is not shown in the drawings, after which a compression operation of the annular resin material P may be started (step S08). This compression operation may be implemented by fitting the extrusion ring 152 of the press device 150 through the feed-in port 132 of the jig 130 into the ring-shaped hole portion 131 (see Fig. 3B). The cap body 135 is attached to one face of the jig 130 so as to prevent the annular resin material P being extruded from the ring-shaped hole portion 131 by this compression operation.

The annular resin material P compressed by step S08 may be removed from inside the jig 130 by further operation of the press device 150. More specifically, first the cap body 135 is detached from the jig 130 (see Fig. 3C). Then the extrusion ring 152 of the press device 150 pushes further into the ring-shaped hole portion 131 and extrudes the annular resin material P in the ring-shaped hole portion 131 through the end portion 133 at the opposite side of the ring-shaped hole portion 131 from the side thereof at which the feed-in port 132 is formed (step S09). Thus, the annular resin material P may be removed (see Fig. 30D). The annular resin material P that is extruded from the jig 130 is supplied to the motor core manufacturing device 1, which is described below, and may be used for attachment of permanent magnets 3 into slot sections 4 of the rotor core 2.

According to the resin molding method according to the present exemplary embodiment as described above, an annular resin material that enables uniform heating in a motor core manufacturing device may be molded.

Now, the motor core manufacturing device 1 and a motor core manufacturing method that make use of the resin molding device 100 and resin molding method described above are described.

### - Motor core manufacturing device -

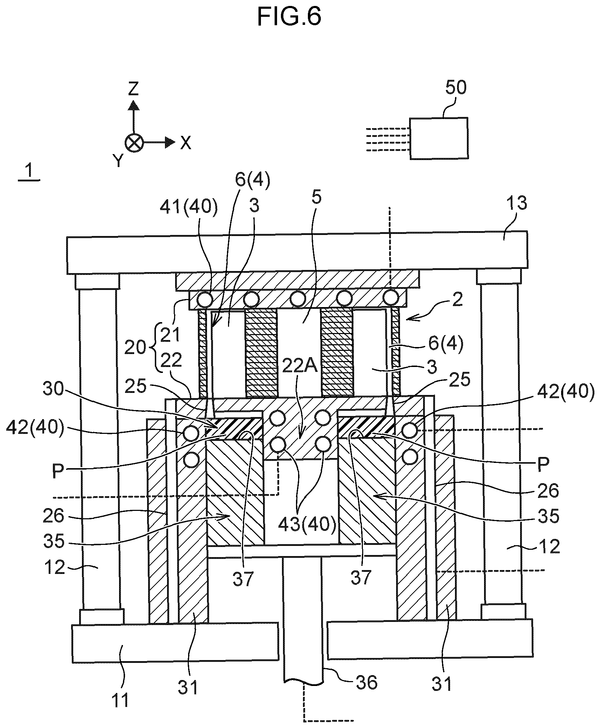

Fig. 6 is a schematic descriptive diagram showing an example of the motor core manufacturing device according to the exemplary embodiment of the present disclosure. The motor core manufacturing device 1 according to the present exemplary embodiment is a device for attaching the permanent magnets 3 to the slot sections 4 formed in a motor core, for example, the inner rotor-type rotor core 2. The attachment of the permanent magnets 3 is implemented by resin molding. The present exemplary embodiment illustrates the rotor core 2 as an example of a motor core, but the present disclosure is not limited thus. More specifically, the motor core manufacturing device 1 may be used for resin molding of, for example, a portion of a stator core serving as a motor core on which a coil is wound or the like, or for filling a penetrating hole provided in the axial direction of an unfastened stacked core or the like with resin in order to integrally fix the stacked core.

Fig. 7A and Fig. 7B are schematic perspective views showing examples of a rotor core and an annular resin material to be employed in the motor core manufacturing device shown in Fig. 6. As shown in Fig. 7A, the rotor core 2 may be structured as a substantially circular tube-shaped magnetic body made by stacking plural thin plates of electrical steel. A penetrating hole 5 is provided in an axial central portion of the rotor core 2. A shaft that constitutes a rotary shaft when the rotor core 2 is assembled to a motor is inserted into the penetrating hole 5. A plural number (four in Fig. 7A) of the slot sections 4 are disposed in a ring shape so as to encircle the penetrating hole 5. The slot sections 4 extend in the axial direction of the rotor core 2. The slot sections 4 may be formed with shapes into which the permanent magnets 3 (see Fig. 6) can be inserted, for example, cuboid or circular arc-shaped penetrating cavities that penetrate in the thickness direction of the rotor core 2, but specific shapes are not particularly limited. Similarly, numbers of the permanent magnets 3 and slot sections 4 may be arbitrarily altered and may be greater than the four shown in Fig. 7A, for example, in the order of 10 to 40.

The permanent magnets 3 are inserted into the interiors of the slot sections 4 of the rotor core 2 and fixed. Each permanent magnet 3 may be structured as, for example, a cuboid body or a block body with a circular arc shape in plan view that is a little smaller than the slot section 4. Whether or not the permanent magnet 3 is magnetized at the time of insertion into the slot section 4 does not matter herein. Furthermore, whether or not the permanent magnet 3 is divided in the stacking direction or a direction orthogonal to the stacking direction does not matter herein. When the permanent magnet 3 is inserted into the slot section 4, at least partial gaps are formed between outer peripheral surfaces of the permanent magnet 3 and inner peripheral surfaces of the slot section 4. The gaps formed in the slot section 4 may function as fill gaps 6, which are an example of resin fill sections. The plural fill gaps 6 may respectively be in communication with end portions of resin fill passages 25 when the rotor core 2 is placed on a lower mold 22.

The motor core manufacturing device 1 according to the present exemplary embodiment includes the resin molding device 100 described above. Accordingly, the annular resin material P to be used in the motor core manufacturing device 1 is the annular resin material P principally including a thermosetting resin that is molded by the resin molding device 100 described above. As shown in Fig. 7B, the annular resin material P may be structured as a resin molded body formed in a ring shape with a prescribed thickness; an annular shape is preferable. In other words, the annular resin material P according to the present exemplary embodiment can be described as a resin molded body that is molded in a doughnut shape with the penetrating hole H in a central portion thereof. Specific dimensions and the like of the annular resin material P may be adjusted by adjustment of the structural elements of the resin molding device 100 to suit shapes of the chamber 30 and the resin fill passages 25, which are described below, and volumes of the fill gaps 6 and the like.

As shown in Fig. 6, in addition to the resin molding device 100 that molds the annular resin material, the motor core manufacturing device 1 according to the present exemplary embodiment includes at least a mold 20 that is capable of retaining the rotor core 2, the ring-shaped chamber 30 that is capable of accommodating the annular resin material P, a ring-shaped plunger 35 that is movable within the chamber 30 and serves as an example of a plunger, and manufacturing device side heaters 40 disposed at circumferences of the mold 20 and the chamber 30. The structural elements mentioned above may be accommodated in a manufacturing device body 10 or may be attached to suitable locations of the manufacturing device body 10.

The manufacturing device body 10 may include a platform 11, a plural number (for example, four) of pillars 12 provided standing from the surface of the platform 11, and a top plate 13 supported at distal end portions of the pillars 12. An upper mold 21 of the mold 20, which is described below, is fixed to a surface at the lower side of the top plate 13. An actuator, which is not shown in the drawings, may be used to raise and lower the top plate 13 in the vertical direction along with the pillars 12 and the upper mold 21. Raising and lowering operations of the top plate 13 are conducted principally when the rotor core 2 is being retained in the mold 20 and when the rotor core 2 is being removed and discharged from the mold 20.

The mold 20 is a member that retains the rotor core 2. More specifically, the mold 20 may include the upper mold 21 and the lower mold 22. The upper mold 21 abuts against and supports an upper portion of the rotor core 2, more precisely an upper face of the rotor core 2. The lower mold 22 abuts against and supports a lower portion of the rotor core 2, more precisely a lower face of the rotor core 2.

The resin fill passages 25 are provided in the interior of the lower mold 22. The resin fill passages 25 are for supplying softened resin to the plural fill gaps 6 in the rotor core 2 that is placed on the lower mold 22. Passage structure of the resin fill passages 25 may be altered to suit numbers and shapes of the fill gaps 6 in the rotor core 2, the shape of the chamber 30 and so forth. A structure that links the fill gaps 6 with the chamber 30 by the shortest distances is preferable.

The rotor core 2 whose slot sections 4 are to be filled with the resin may frequently be replaced with a rotor core 2 in another shape. Accordingly, plural lower molds 22 with different structures of the resin fill passages 25 may be prepared in advance and may be suitably exchanged and employed to suit each rotor core 2 retained in the mold 20. The lower mold 22 further includes a lifter 26 that enables raising and lowering of the lower mold 22, for charging of the annular resin material P into the chamber 30, cleaning of the resin fill passages 25 and so forth.

The upper mold 21 is movable in the vertical direction along with the top plate 13, as mentioned above. When the rotor core 2 has been placed on the lower mold 22, the rotor core 2 may be retained in the manner of being sandwiched between the upper mold 21 and the lower mold 22 by the upper mold 21 being lowered and pressing the upper face (or lower face) of the rotor core 2 with a prescribed pressure force. Shapes, materials and the like of surfaces of the upper mold 21 and lower mold 22 that abut against the rotor core 2 may be adjusted such that, when the fill gaps 6 are being filled with the resin, the filled resin does not leak out to the exterior of the rotor core 2. More specifically, the contacting surfaces may be adjusted so as to form a tightly sealed state when the rotor core 2 is sandwiched by the upper mold 21 and lower mold 22.

As mentioned above, the present exemplary embodiment employs a structure that moves the upper mold 21 vertically along with the top plate 13, but an alternative structure may be employed, provided that structure is capable of relatively altering the vertical direction positions of the upper mold 21 and lower mold 22. More specifically, for example, a structure may be employed that, instead of moving the upper mold 21 in the vertical direction, moves the lower mold 22 in the vertical direction or moves both the upper mold 21 and the lower mold 22 in the vertical direction.

In the present exemplary embodiment, an example is illustrated in which the slot sections 4 of the rotor core 2 have cuboid shapes that open in the vertical direction and have substantially no gaps in the front-and-rear direction and the left-and-right direction. Accordingly, the upper mold 21 and lower mold 22 that are employed have substantially flat abutting surfaces, but the shapes of abutting surfaces of the upper mold 21 and lower mold 22 may be altered as appropriate to match the shape of the rotor core 2 being retained. For example, when the motor core manufacturing device 1 according to the present exemplary embodiment is used for resin molding of an inner rotor-type stator core, the upper mold 21 and lower mold 22 that are employed may include protrusions to be inserted into a cavity formed in the center of the stator core.

The chamber (also referred to as a pot) 30 is formed as a ring-shaped cavity into which the annular resin material P that is to fill the fill gaps 6 can be charged. That is, the chamber 30 is structured by a substantially circular ring-shaped cavity extending in the vertical direction that is formed in the interior of a support stand 31 provided on the platform 11. The chamber 30 is in communication with the resin fill passages 25 formed in the lower mold 22. The present exemplary embodiment illustrates an example in which the shape of the chamber 30 is formed as a cavity with an annular shape in plan view, but the shape of the chamber 30 may be altered as appropriate to suit the shape of the annular resin material P that is to be charged and the like.

The ring-shaped plunger 35 is a member that conveys resin in the chamber 30 formed by the ring-shaped cavity towards the resin fill passages 25. Thus, it is sufficient that at least a pressing face 37 disposed at an upper portion of the ring-shaped plunger 35 is formed in a ring shape, and the pressing face 37 may be provided so as to seal off a floor portion of the ring-shaped plunger 35. In this exemplary embodiment, the pressing face 37 functions as a floor face of the chamber 30. A raising and lowering arm 36 is attached to a face of the ring-shaped plunger 35 at the opposite side thereof from the side at which the pressing face 37 is provided. The raising and lowering arm 36 is coupled to an actuator that is not shown in the drawings. Actions of the actuator are transmitted to the ring-shaped plunger 35 via the raising and lowering arm 36, causing the pressing face 37 to be raised and lowered within the chamber 30.

The heaters 40 may be structured by widely known heaters or the like. The heaters 40 heat suitable locations within the manufacturing device body 10. The heaters 40 according to the present exemplary embodiment include at least a mold heater 41 disposed inside the mold 20 and a chamber outer periphery heater 42 disposed at the outside circumference of the ring-shaped chamber 30.

The mold heater 41 is disposed one or both of inside the upper mold 21 and inside the lower mold 22. The chamber outer periphery heater 42 is disposed at locations close to a wall surface at the outer side of the ring-shaped chamber 30, for example, so as to encircle the circumference of the chamber 30. More specifically, similarly to the barrel heater 115, infrared heaters, sheath heaters and the like may be employed for the mold heater 41 and the chamber outer periphery heater 42, and for a chamber inner periphery heater 43 that is described below.

After the annular resin material P is charged into the chamber 30, when the chamber outer periphery heater 42 is activated, the chamber outer periphery heater 42 may heat the annular resin material P. In this exemplary embodiment, because the penetrating hole H is formed in the annular resin material P, all of the resin material is disposed at relatively small distances from the chamber outer periphery heater 42. Therefore, local temperature differences that are caused by differences in distances from a heat source (for example, the chamber outer periphery heater 42) when the annular resin material P in the chamber 30 is being heated and softened may be kept small.

In addition to the mold heater 41 and chamber outer periphery heater 42 mentioned above, the heaters 40 may include the chamber inner periphery heater 43 disposed at the inside circumference of the chamber 30. The chamber inner periphery heater 43 according to the present exemplary embodiment is an example that is provided at a pillar-shaped protrusion portion 22A. The protrusion portion 22A is formed at a central portion of the lower face of the lower mold 22 and forms a wall surface at the inner side of the chamber 30. The chamber inner periphery heater 43 provided at the protrusion portion 22A is disposed in the central region of the ring-shaped chamber 30, along the wall surface at the inner side of the chamber 30. In the present exemplary embodiment, because the annular resin material P is employed as the resin instead of a tablet-shaped resin, a heater may also be disposed at the inside circumference of the resin. Providing the chamber inner periphery heater 43 may supplement heating of inner side portions of the annular resin material P at positions that are relatively further from the chamber outer periphery heater 42. As a result, uniform heating may be conducted more assuredly. The heaters 40 according to the present exemplary embodiment are not limited to the various heaters mentioned above. For example, a separate heater may be provided at a location near to the pressing face 37 of the ring-shaped plunger 35.

The motor core manufacturing device 1 according to the present exemplary embodiment further includes a manufacturing device side control device 50 for controlling the structural elements described above. The manufacturing device side control device 50 is equipment that is electronically connected to the structural elements described above and is capable of conducting arbitrary manufacturing steps by controlling operations of the structural elements. The manufacturing device side control device 50 may, for example, be connected to the structural elements to be capable of communications by wired or wireless communications, as depicted by the dotted lines in Fig. 6. Similarly to the molding device side control device 160, the manufacturing device side control device 50 may be realized using a sequencer (a programmable logic controller (PLC)), a widely known computer or the like. The manufacturing device side control device 50 may be constituted by just one of these computers and such or by a plural combination of the same.

By operating the structural elements described above, the manufacturing device side control device 50 may implement a motor core manufacturing method according to the present exemplary embodiment, which is described below. Accordingly, the motor core manufacturing method according to the present exemplary embodiment may be provided to a computer constituting the manufacturing device side control device 50 in the form of a program of software or the like that contains commands for conducting prescribed operations, or in the form of a non-transitory recording medium storing the program, or in the form of an application program provided via a network or the like. Details of the motor core manufacturing method according to the present exemplary embodiment are described below.

In the motor core manufacturing device 1 provided with the structures described above, it is particularly noteworthy that the plural fill gaps 6 of the rotor core 2 to be filled with resin are provided in a ring shape with prescribed intervals, and that the chamber 30 is in a ring shape. When the outer diameter of the chamber 30 approximately matches the arrangement of the fill gaps 6 as in the present exemplary embodiment, lengths of the resin fill passages 25 linking the chamber 30 with the fill gaps 6 are shorter than in, for example, a conventional structure in which a chamber is disposed in the middle of a device. Therefore, according to the motor core manufacturing device 1 according to the present exemplary embodiment, a duration required for the resin to pass through the resin fill passages 25 may be made shorter than in a conventional structure, and the slot sections 4 may be filled in with a greater variety of resin materials than in a conventional method.

As described above, according to the motor core manufacturing device 1 according to the present exemplary embodiment, because the chamber 30 and the annular resin material P charged into the chamber 30 both have ring shapes, temperature differences are less likely to occur during heating of the resin material, and the resin material may be uniformly heated. Because temperature differences during the heating of the resin that is heated and softened in the chamber 30 are suppressed, the curing reaction may occur uniformly. Consequently, clogging of the resin fill passages 25, a loss of fluidity or the like caused by the curing reaction occurring in an unintended manner may be suppressed. Because the resin molding device 100 is employed to mold the annular resin material P, the annular resin material P may be pre-heated uniformly. Because uniform heating of the resin may be implemented in the chamber 30, high-frequency pre-heating prior to the molding may be unnecessary or may be shortened.

Because the shape of the chamber 30 is the ring shape matching the arrangement of the fill gaps 6, the lengths of the resin fill passages 25 may be shortened and progression of the curing reaction of the resin in the resin fill passages 25 may be suppressed. As a result, the slot sections 4 may be thoroughly filled in with the resin.

Accordingly, the outer diameter and inner diameter of the chamber 30 are specified with consideration for the arrangement of the fill gaps 6. Preferably, the outer diameter and inner diameter of the chamber are adjusted so as to shorten the distances between the chamber 30 and the fill gaps 6 as much as possible. The shorter the distances between the chamber 30 and the fill gaps 6, the shorter the resin fill passages 25 linking the chamber 30 with the fill gaps 6 may be.

Now, the motor core manufacturing method according to the present exemplary embodiment is described. In the descriptions of the motor core manufacturing method below, an example is described in which the motor core manufacturing device 1 described above is used to manufacture the rotor core 2. However, the motor core manufacturing method may be implemented using a device other than the motor core manufacturing device 1.

### - Motor core manufacturing method -

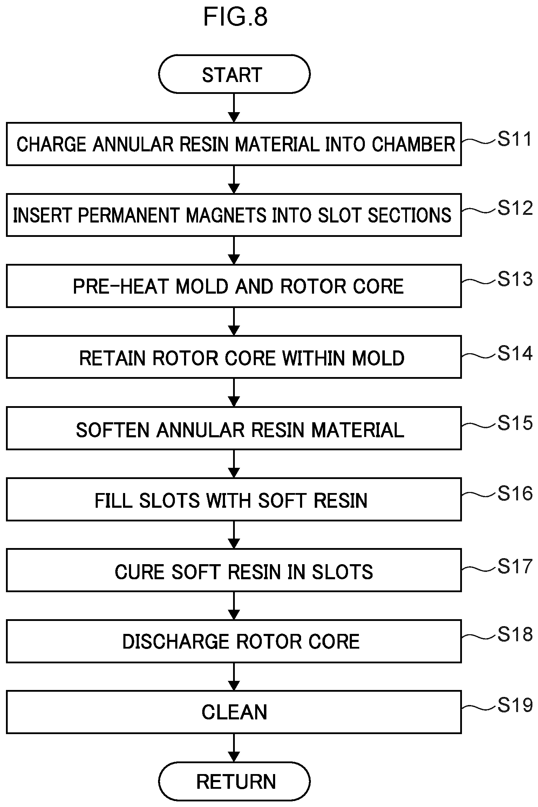

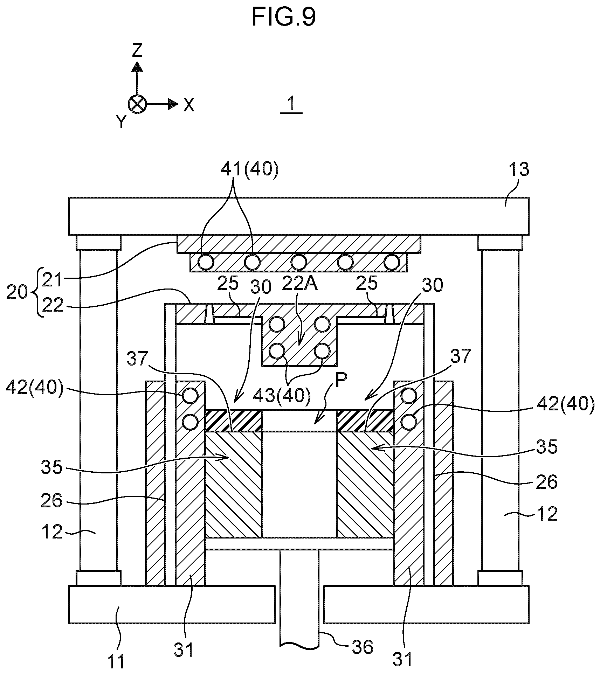

Fig. 8 is a flowchart showing an example of a manufacturing process conducted with the motor core manufacturing device shown in Fig. 1. Fig. 9 to Fig. 12 are operation description diagrams showing examples of operation states of the motor core manufacturing device shown in Fig. 6. The motor core manufacturing method according to the present exemplary embodiment is described below principally with reference to Fig. 8 to Fig. 12. The motor core manufacturing method according to the present exemplary embodiment includes, in addition to the manufacturing process sequence shown in Fig. 8, the resin molding method according to the present exemplary embodiment that is described above. Therefore, in the motor core manufacturing method according to the present exemplary embodiment, the resin molding method shown in Fig. 5 is conducted and then the manufacturing process shown in Fig. 8 is conducted. To aid viewing of Fig. 9 to Fig. 12, some members with little relationship to this series of operations and the associated reference symbols are omitted from the drawings in Fig. 9 to Fig. 12.

When the motor core manufacturing method according to the present exemplary embodiment is being conducted, firstly the annular resin material P is molded by carrying out the series of steps shown in Fig. 5. When the annular resin material P is molded, as shown in Fig. 9, the lifter 26 is activated and raises the lower mold 22, and the molded annular resin material P is charged into the chamber 30 that is exposed as a result (step S11). The annular resin material P charged into the chamber 30 is placed on the pressing face 37 of the ring-shaped plunger 35. The size of the annular resin material P that is charged into the chamber 30 may be adjusted in consideration of sizes of the resin fill passages 25 and the fill gaps 6 of the rotor core 2 that is to be subsequently retained.

Performing pre-heating of the chamber 30 before step S11 is preferable. Pre-heating of the chamber 30 may be conducted by, for example, activating one or both of the chamber outer periphery heater 42 and the chamber inner periphery heater 43.

The permanent magnets 3 and the rotor core 2 to which the permanent magnets 3 are to be attached are prepared before or after the annular resin material P is charged into the chamber 30, or at the same time as the annular resin material P is charged, and the permanent magnets 3 are inserted into the slot sections 4 of the rotor core 2 (step S12). The mold 20 and the rotor core 2 are pre-heated (step S13). The pre-heating of the mold 20 may be conducted using, for example, the mold heater 41. The pre-heating of the rotor core 2 may be performed separately from the pre-heating of the mold 20, using publicly known heating means that is not shown in the drawings or the like. If the mold heater 41 is activated in the state in which the rotor core 2 is placed on the lower mold 22, the pre-heating of the rotor core 2 may be carried out simultaneously with the pre-heating of the mold 20. When the mold 20 and the rotor core 2 are pre-heated simultaneously, step S14, which is described below, may be conducted before step S13. Pre-heating temperatures of the mold 20 and the rotor core 2 may be, for example, in the order of 100°C to 180°C. The pre-heating may be carried out on just one or other of the mold 20 and the rotor core 2.

The order of step S12 and step S13 may be altered, in which case the permanent magnets 3 are pre-heated separately or are not pre-heated, and are inserted into the slot sections 4 of the rotor core 2 after the pre-heating of the rotor core 2 and the mold 20.

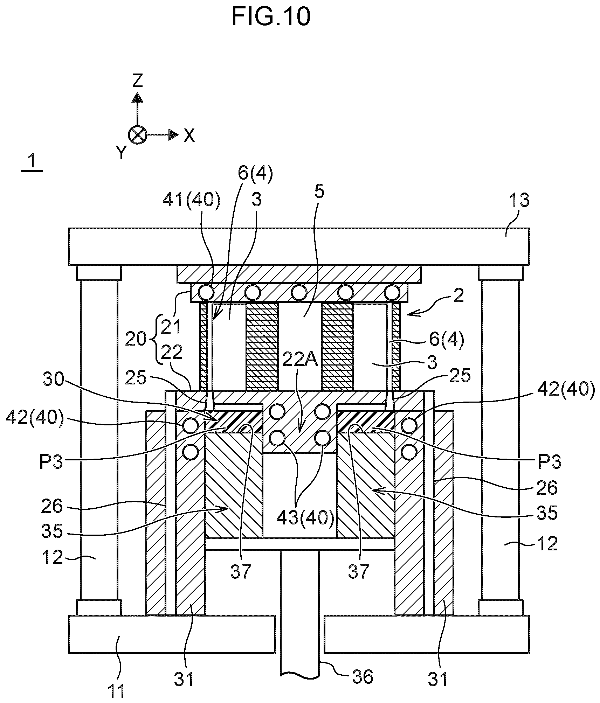

When the pre-heating of the mold 20 and the rotor core 2 is completed, as shown in Fig. 10, the lifter 26 is activated and lowers the lower mold 22, after which the rotor core 2 is placed on the lower mold 22. Then the upper mold 21 is moved in the lower direction and the rotor core 2 is retained within the mold 20 (step S14). The upper mold 21 is regulated so as to press the upper face of the rotor core 2 with a prescribed pressure force. As a result, the upper mold 21 makes area contact with the upper face of the rotor core 2 and the lower mold 22 makes area contact with the lower face of the rotor core 2.

At a suitable timing after the above-mentioned step S11, the chamber outer periphery heater 42 and the chamber inner periphery heater 43 are activated and heat the annular resin material P (step S15). The interior of the chamber 30 is heated in order to lower the viscosity of the annular resin material P and form a softened resin (below referred to as "the soft resin") P3. The chamber outer periphery heater 42 and chamber inner periphery heater 43 that are used for this heating are preferably controlled so as to prevent local heat differences in the annular resin material P. By this heating, the annular resin material P may be fused and lowered in viscosity, and changed to the soft resin P3 with high fluidity.

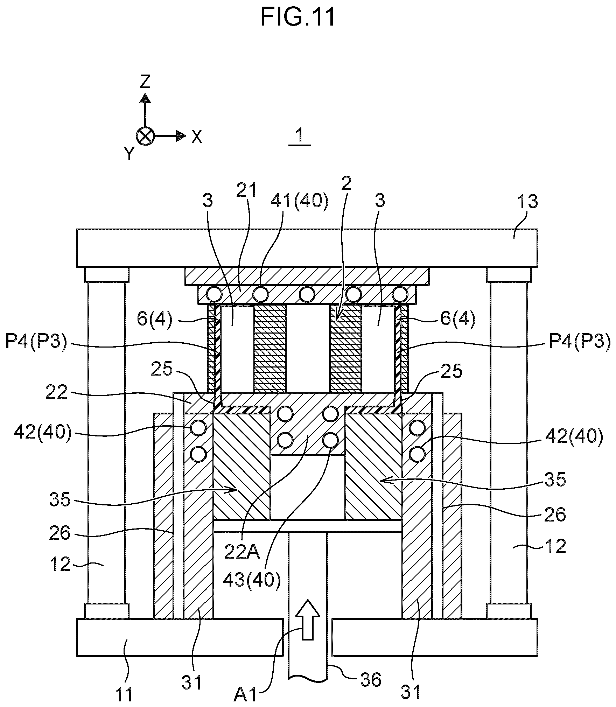

The annular resin material P changes to the soft resin P3 and then, as shown in Fig. 11, the fill gaps 6 in the slot sections 4 are filled in with the soft resin P3 by the ring-shaped plunger 35 being raised and pushing up the soft resin P3 (step S16). The soft resin P3 that is pushed up by the pressing face 37 of the ring-shaped plunger 35 passes through the resin fill passages 25 from the chamber 30 and flows into the fill gaps 6. For the filling of the fill gaps 6 with the soft resin P3 in step S16 to be conducted smoothly, for example, air holes (not shown in the drawings) for releasing air in the fill gaps 6 may be provided at suitable locations of the upper mold 21.

When the filling of the fill gaps 6 with the soft resin P3 is completed, the mold heater 41 is activated and heats the soft resin P3 in the fill gaps 6 to a higher temperature than the heating in step S15, as a result of which the soft resin P3 is cured (step S17). When curing the soft resin P3, the mold heater 41 heats the soft resin P3 several times to a temperature range in which the viscosity of the soft resin P3 is greatly increased. The soft resin P3 is changed to cured resin P4 by this heating. Thus, the permanent magnets 3 are fixed in the slot sections 4 of the rotor core 2 by resin molding. A heating duration in step S17 may be suitably adjusted to suit the type of resin being used in the annular resin material P and the like.

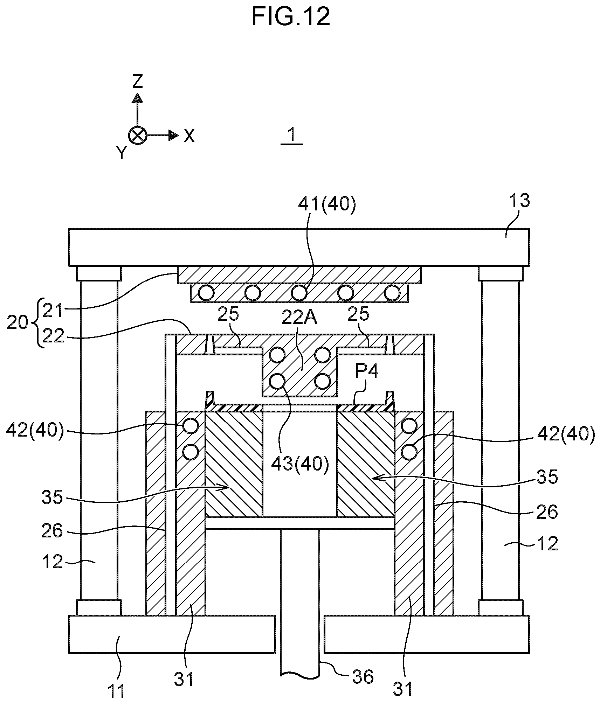

When the resin molding process sequence described above is completed, the upper mold 21 is raised and conveying means that is not shown in the drawings, such as a robot arm or the like, is used to discharge the resin-molded rotor core 2 out of the device (step S18). The discharged rotor core 2 may be fed to a separate device for, for example, attachment of a shaft and the like. When the discharge of the rotor core 2 is completed, the motor core manufacturing device 1 is cleaned (step S19). The cleaning of the motor core manufacturing device 1 includes, as illustrated in Fig. 12, activating the lifter 26 and removing cured resin P2 from inside the resin fill passages 25. The cleaning may also include using a cleaning member such as a brush or the like to clean surfaces of the mold 20, the interior of the chamber 30 and so forth.

As described above, according to the motor core manufacturing method according to the present exemplary embodiment, because the chamber 30 and the annular resin material P charged into the chamber 30 are both ring-shaped, temperature differences are less likely to arise during the heating of the resin in the chamber 30, and the resin may be heated uniformly. Because the shape of the chamber 30 matches the arrangement of the fill gaps 6, the lengths of the resin fill passages 25 may be shortened and progression of the curing reaction of the resin in the resin fill passages 25 may be suppressed.

In the exemplary embodiment described above, a mode is illustrated in which the resin fill passages 25 are provided in the lower mold 22 and the fill gaps 6 are filled with the soft resin P3 from below. However, the filling direction is not limited thus. For example, a mode is applicable in which the resin fill passages are provided in the upper mold 21 instead of the lower mold 22 and are filled with the softened resin from above. A mode is also applicable in which the resin fill passages are provided in both the lower mold 22 and the upper mold 21 and are filled with the resin from both below and above.

### - Variant Examples -

The resin molding device 100 and resin molding method described above illustrate an example in which the press device 150 is used to extrude the annular resin material P from the jig 130, and a single body of the annular resin material P is used in the motor core manufacturing device 1 and the motor core manufacturing method, but the present disclosure is not limited thus. Accordingly, as variant examples of the exemplary embodiment described above, a motor core manufacturing device 1A and a motor core manufacturing method are described below that use charged members 60 and 70, which are made as alternatives to the annular resin material P, instead of the single-body annular resin material P.

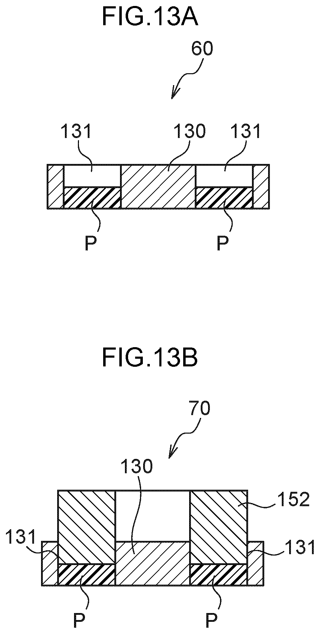

Fig. 13A is a schematic sectional diagram showing an example of a charged member that can be charged into a chamber. Of the charged members 60 and 70 shown in Fig. 13A and Fig. 13B, as shown in Fig. 13A, the first charged member 60 is structured by the annular resin material P and a jig supporting the annular resin material P, more specifically the jig 130 that accommodates the annular resin material P in the ring-shaped hole portion 131 and is a structural element of the resin molding device 100. This first charged member 60 may be referred to as, in other words, the jig in a state prior to extrusion of the annular resin material P from the jig 130 (see Fig. 3C).

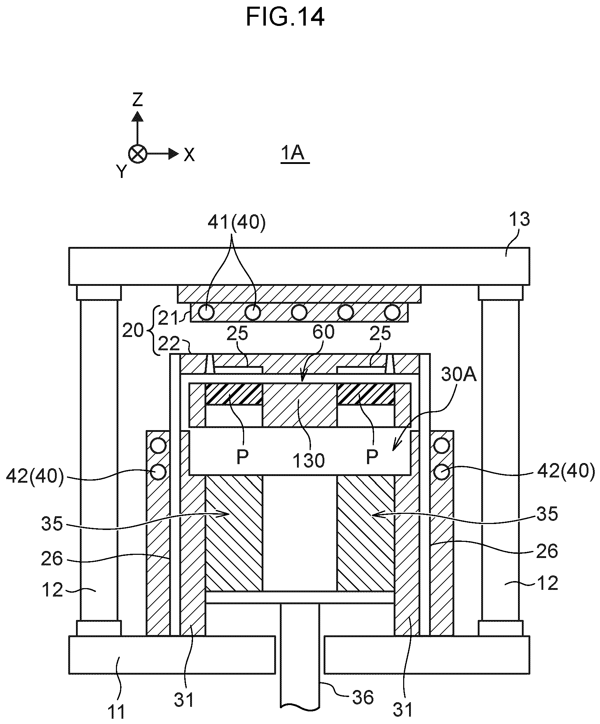

Fig. 14 is a diagram showing a state, corresponding with Fig. 9, of the motor core manufacturing device according to a variant example into which the charged member shown in Fig. 13A can be charged. The motor core manufacturing device 1A according to the present variant example has similar structures to the motor core manufacturing device 1 according to the exemplary embodiment described above, apart from structures in the region of the chamber 30A. Accordingly, the descriptions below focus on structures that differ from the motor core manufacturing device 1 described above. Structural elements that are the same as in the motor core manufacturing device 1 are assigned the same reference symbols and are not described here.

As shown in Fig. 14, the chamber 30A of the motor core manufacturing device 1A according to the present variant example has a structure with a circular tube-shaped cavity whose outer diameter is adjusted to be larger than the chamber 30 of the motor core manufacturing device 1 described above. This tube-shaped chamber 30A is adjusted to a size into which the first charged member 60 can be charged.

The process of using the motor core manufacturing device 1A according to the present variant example to manufacture a motor core is the same as the motor core manufacturing method according to the exemplary embodiment described above except in that the first charged member 60 is charged into the chamber 30A instead of the annular resin material P.

According to the motor core manufacturing device 1A and the motor core manufacturing method according to the present variant example, the step of extruding the annular resin material P out of the jig 130 (step S09) may be omitted from the process of molding the annular resin material P. Therefore, the manufacturing process sequence may be simplified.

Alternatively of the charged members 60 and 70 shown in Fig. 13A and Fig. 13B, similarly to the first charged member 70, the second charged member 70 includes the annular resin material P and the jig accommodating the annular resin material P therein, more specifically the jig 130 that is a structural element of the resin molding device 100. The second charged member 70 may include, in addition to the two structural elements described above, an extrusion ring of which a distal end portion fits into the ring-shaped hole portion 131 of the jig 130 from the side at which the one end portion is disposed, that is, the extrusion ring 152 that is a portion of the press device 150. The second charged member 70 may be referred to as, in other words, a jig with which, in the state prior to the extrusion of the annular resin material P from the jig 130, the extrusion ring 152 separated from the press device body 151 is integrated.

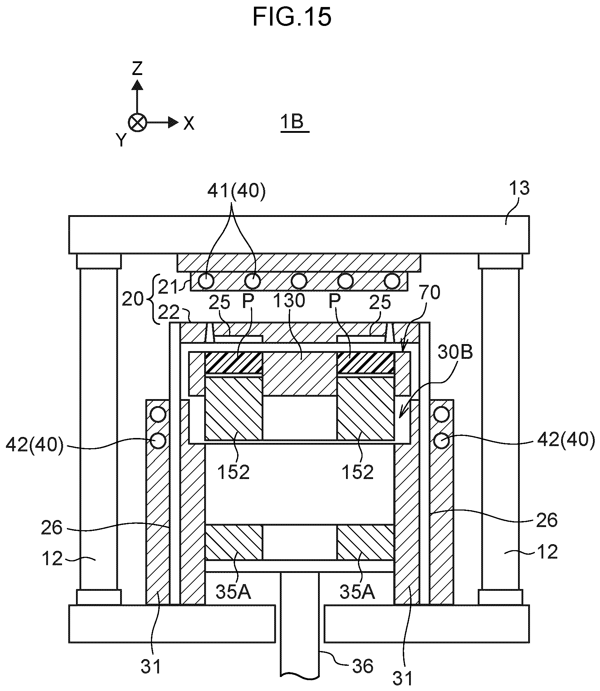

Fig. 15 is a diagram showing a state, corresponding with Fig. 9, of a motor core manufacturing device according to an alternative variant example into which the charged member shown in Fig. 13B can be charged. A motor core manufacturing device 1B according to the present variant example has similar structures to the motor core manufacturing device 1 according to the exemplary embodiment described above, apart from structures of a chamber 30B and a plunger 35A. Accordingly, the descriptions below focus on structures that differ from the motor core manufacturing device 1 described above. Structural elements that are the same as in the motor core manufacturing device 1 are assigned the same reference symbols and are not described here.

As shown in Fig. 15, the chamber 30B of the motor core manufacturing device 1B according to the present variant example, has a structure with a circular tube-shaped cavity whose outer diameter is adjusted to be greater than the chamber 30 of the motor core manufacturing device 1 described above. The tube-shaped chamber 30B may be adjusted to a size into which the second charged member 70 described above can be charged. The second charged member 70 charged into the chamber 30B is charged such that the extrusion ring 152 is disposed at the lower side thereof.

As shown in Fig. 15, the plunger 35A of the motor core manufacturing device 1B according to the present variant example is adjusted so as to have a shorter vertical direction length than the plunger 35 of the motor core manufacturing device 1 according to the exemplary embodiment described above. In consequence, the plunger 35A of the motor core manufacturing device 1B according to the present variant example fills the fill gaps 6 with the soft resin P3 that has been softened in the chamber 30B by operating so as to push up the extrusion ring 152. The present variant example may be described in other words as a structure in which the function of the ring-shaped plunger is implemented by two elements, the plunger 35A and the extrusion ring 152. Accordingly, the plunger 35A illustrated in the present variant example need not be ring-shaped as long as the plunger 35A can push up the extrusion ring 152.

The process of using the motor core manufacturing device 1B according to the present variant example to manufacture a motor core is the same as the motor core manufacturing method according to the exemplary embodiment described above except in that the second charged member 70 is charged into the chamber 30B instead of the annular resin material P and the fill gaps 6 are filled with the soft resin P3 by the plunger 35A pushing up the extrusion ring 152.

According to the motor core manufacturing device 1B and the motor core manufacturing method according to the present variant example, the step of extruding the annular resin material P out of the jig 130 (step S09) may be omitted from the process of molding the annular resin material P. In addition, because the extrusion ring 152 functions as a portion of the plunger, the shape of the plunger need not be preparatorily changed to match the jig 130.

In the motor core manufacturing devices 1A and 1B according to the variant examples described above, because the jig 130 is provided at a location that corresponds with the penetrating hole H in the annular resin material P, a structure in which the chamber inner periphery heater 43 is provided is difficult to form. However, in the motor core manufacturing device of the present disclosure, because the annular resin material P is employed as the resin material, non-uniform heating is suppressed effectively. In addition, when a central portion of the jig 130 is formed as a circular tube-shaped portion as illustrated in Fig. 13A and the like instead of a circular rod shape, the chamber inner periphery heater 43 may be provided by being inserted inside this circular tube. When the central portion of the jig 130 is formed in this circular tube shape, handling of the charged member is easier.

The motor core manufacturing devices and motor core manufacturing methods according to the exemplary embodiment and variant examples described above illustrate examples in which the inner peripheral surface and outer peripheral surface of the annular resin material P are both circular, but the present disclosure is not limited thus. More specifically, shapes of the inner peripheral surface and outer peripheral surface may be altered to match the arrangement of the fill gaps 6 in the rotor core 2. Accordingly, a further variant example of the first charged member 60 that has been illustrated as a variant example is described below.

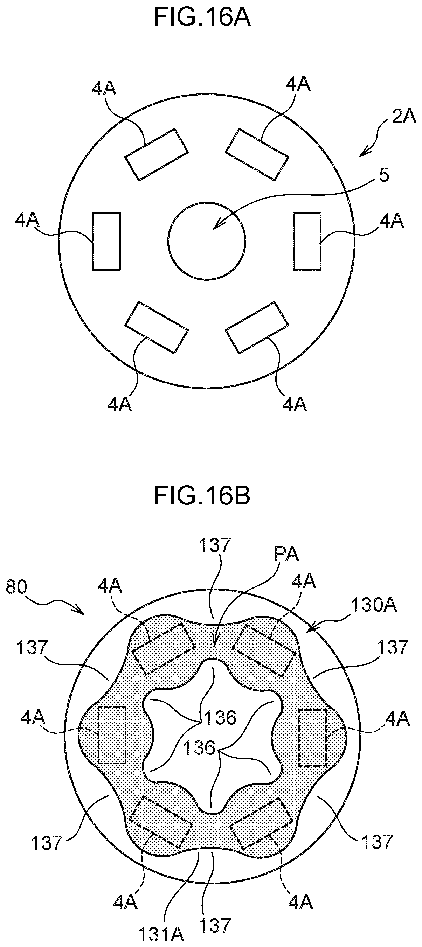

Fig. 16A and Fig. 16B are descriptive diagrams for describing the variant example of the first charged member. Fig. 16A is a plan view showing an example of a rotor core, and Fig. 16B is a plan view showing a third charged member 60A including the annular resin material P for filling in the rotor core shown in Fig. 16A. As shown in Fig. 16B, the third charged member 60A according to the present variant example is similar to the first charged member 60 in being structured by an annular resin material PA and a jig that accommodates the annular resin material PA therein, more specifically a jig 130A that may function as a structural element of the resin molding device 100. However, in the jig 130A of the third charged member 60A, plural inner side projections 136 and outer side projections 137 are formed at an inner side interior wall surface and an outer side interior wall surface of a ring-shaped hole portion 131A. The inner side projections 136 and outer side projections 137 extend along the conveyance direction, projecting in directions intersecting the conveyance direction. As illustrated in Fig. 16B, forming both of side faces of each of the plural inner side projections 136 and outer side projections 137 as curved faces is preferable. Thus, in the annular resin material PA contained in the third charged member 60A, plural constrictions are formed in the circumferential direction.

As shown in, for example, Fig. 16A, the third charged member 60A may be used for resin-filling of a rotor core 2A in which six slot sections 4A are provided in a ring shape. As shown in Fig. 16B, circumferential direction positions of the inner side projections 136 and outer side projections 137 formed at the jig 130A are adjusted so as to be disposed at positions at which the resin fill sections of the rotor core 2A, that is, the slot sections 4 are not provided. When the inner side projections 136 and outer side projections 137 are disposed in this manner, an amount of resin to be cured in the jig 130A may be reduced. Consequently, flow paths of the soft resin P3 may be shortened and the slot sections 4 may be filled in with more of the resin. The above description illustrates an example in which both the inner side projections 136 and the outer side projections 137 are provided at the jig 130A, but only one of the two may be provided.

Although not shown in the drawings, projections similar to the inner side projections 136 and outer side projections 137 illustrated in the third charged member 60A may be formed at an inner side interior wall surface and outer side interior wall surface of a chamber. In this structure, an amount of resin to be cured in the chamber may be reduced. Consequently, flow paths of the soft resin P3 may be shortened and the slot sections 4 may be filled in with more of the resin.

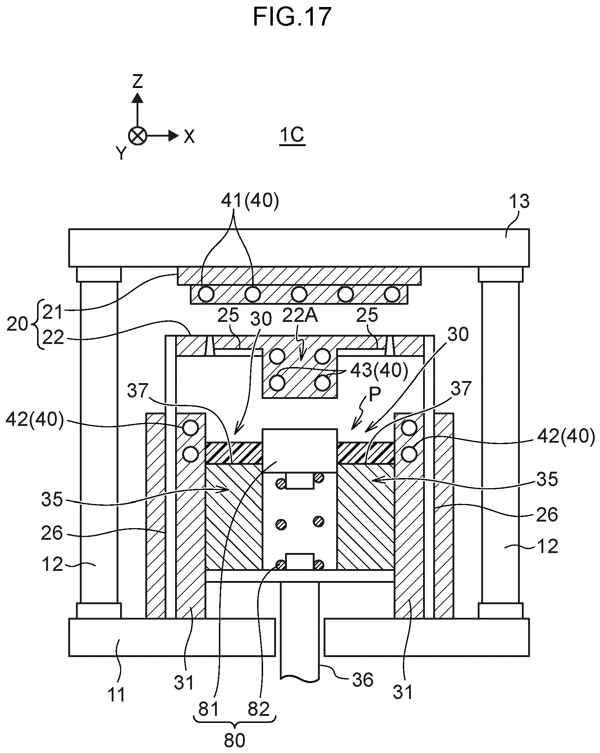

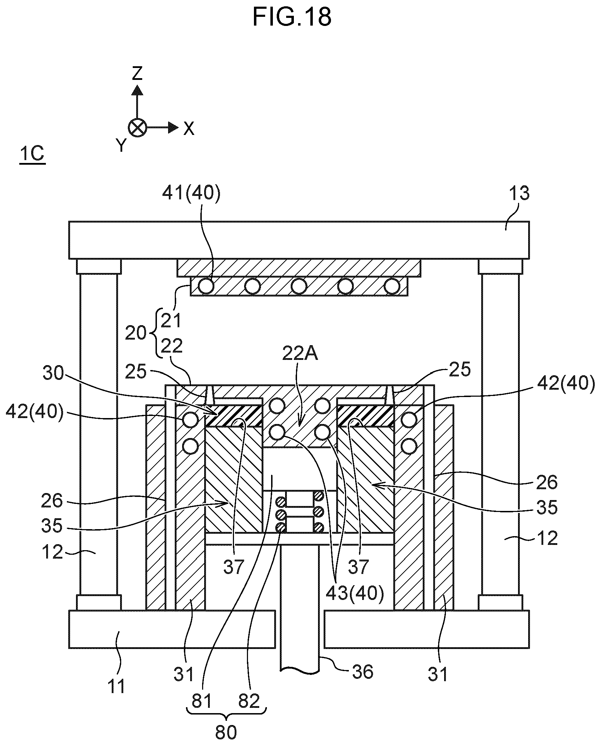

Fig. 17 is a diagram showing a state, corresponding with Fig. 9, of a motor core manufacturing device according to an alternative variant example of the motor core manufacturing device shown in Fig. 6. Fig. 18 is a diagram showing a state in which the lower mold of the motor core manufacturing device shown in Fig. 17 is lowered. As shown in Fig. 17 and Fig. 18, a motor core manufacturing device 1C according to the present variant example includes a guide member 80 at a central region of the chamber 30. The guide member 80 enables temporary positioning of the inner peripheral surface of the annular resin material P charged into the chamber 30. The motor core manufacturing device 1C according to the present exemplary embodiment has similar structures to the motor core manufacturing device 1 described above, apart from including the guide member 80.

The guide member 80 may be structured by a coil spring 82 and a block body 81. One end of the coil spring 82 is supported at the center of a base portion of the ring-shaped plunger 35 and the coil spring 82 extends in the upper direction. The block body 81 is attached to the other end of the coil spring 82 and closes off the central region of the chamber 30. The coil spring 82 may be replaced with urging means having the same function.

The block body 81 may be structured by a member with a cylindrical shape that is substantially equal in diameter to the protrusion portion 22A of the lower mold 22. When the lower mold 22 is raised as shown in Fig. 17, the block body 81 is pushed upward by the urging force of the coil spring 82 and is disposed so as to close off the central region of the chamber 30. At this time, an upper face of the block body 81 may be disposed at a higher position than the pressing face 37 of the ring-shaped plunger 35. When the annular resin material P is charged into the chamber 30 whose central region is closed off by the block body 81, the annular resin material P is disposed in the chamber 30 in a state in which positions of the inner peripheral surface of the annular resin material P are positioned by the block body 81.

When the charging of the annular resin material P into the chamber 30 is completed and then the lower mold 22 is lowered, the block body 81 is pushed by the protrusion portion 22A of the lower mold 22 and is lowered in opposition to the urging force of the coil spring 82. At this time, because the diameter of the block body 81 and the diameter of the protrusion portion 22A are adjusted so as to be substantially equal as mentioned above, the operation of inserting the protrusion portion 22A at the inner peripheral side of the annular resin material P may be conducted smoothly. The structure may be formed such that the upper face of the block body 81 is moved downward further than the pressing face 37 when the lowering of the lower mold 22 is complete, as shown in Fig. 18.

When the guide member 80 is provided as described above in the motor core manufacturing device 1C according to the present variant example, the protrusion portion 22A and the annular resin material P do not come into contact when the lower mold 22 is being lowered. Thus, the operation of lowering the lower mold 22 may be carried out smoothly without damaging the annular resin material P. To facilitate the charging of the annular resin material P, a bevel or curve may be machined at the outer circumference of the upper face of the block body 81.

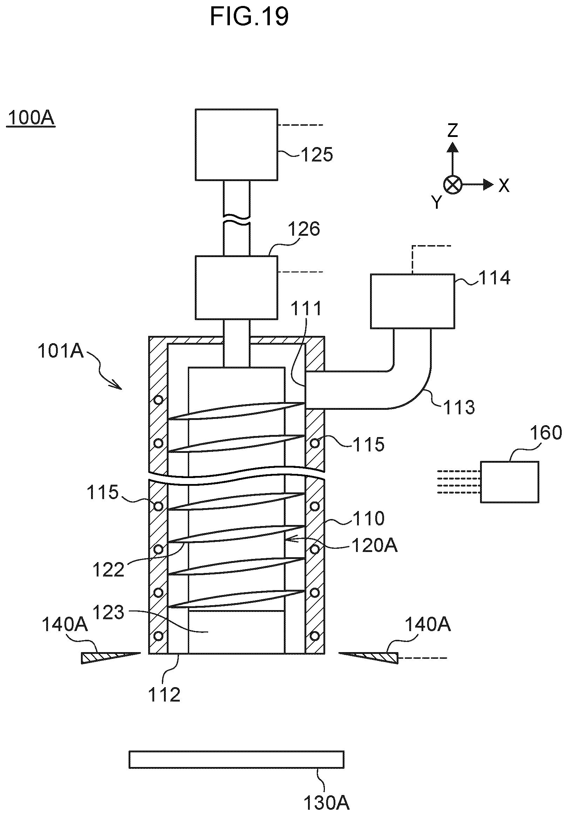

The resin molding device 100 according to the exemplary embodiment described above illustrates an example that uses the jig 130 provided with the ring-shaped hole portion 131 that is capable of accommodating the annular resin material P, but the resin molding device of the present disclosure is not limited thus. Accordingly, a resin molding device 100A and a resin molding method according to a variant example of the present exemplary embodiment are described below with reference principally to Fig. 19 to Fig. 21.

Fig. 19 is a schematic descriptive diagram showing an example of a resin molding device according to a variant example of the exemplary embodiment of the present disclosure. Similarly to the resin molding device 100 according to the exemplary embodiment described above, the resin molding device 100A according to the present variant example is capable of molding the annular resin material P. As shown in Fig. 19, the resin molding device 100A principally includes an extruder 101A, the jig 130A and cutters 140A.

The extruder 101A may be provided with similar structures to the extruder 101 according to the exemplary embodiment described above, except in being provided with a moving apparatus 126 that moves the screw body 121 along the conveyance direction. Accordingly, parts of the extruder 101A that are the same as in the extruder 101 are assigned the same reference symbols and are not described here; only parts that are different from the extruder 101 are described.

The moving apparatus 126 may be structured by an actuator that is capable of sliding the screw body 121 along the direction of extension of the barrel 110. When the moving apparatus 126 is activated, the distal end portion of the screw body 121, which is to say the region of the closing block 123, may be caused to project through the discharge port 112 of the barrel 110 to the outside. In this variant example, the length of the closing block 123 along the conveyance direction is preferably adjusted to be the same as or greater than the axial direction length of the annular resin material P that is to be molded.

The jig 130A receives the molded annular resin material P. The jig 130A according to the present variant example may be structured by a plate-shaped member with a flat surface. The jig 130A according to the present variant example may selectively close the discharge port 112 by abutting against the end portion at the conveyance direction downstream side of the barrel 110. Accordingly, the jig 130A may be moved in a direction approaching the discharge port 112 and a direction away from the discharge port 112 in order to selectively close the discharge port 112. The jig 130A according to the present variant example is movable in the vertical direction. The present variant example illustrates the jig 130A not only receiving the annular resin material P but also having the function of closing the discharge port 112. However, the discharge port 112 may be closed by an alternative member, for example, a widely known shutter that is not shown in the drawings.

The cutters 140A are disposed at positions near the discharge port 112. The cutters 140A cut the resin kneaded body P2, which is discharged out of the barrel 110 through the discharge port 112 along with the screw body 121, at a position near the discharge port 112. The cutters 140A according to the present variant example are disposed so as to surround the circumference of the discharge port 112 and are movable in directions intersecting the conveyance direction, for example, horizontal directions.

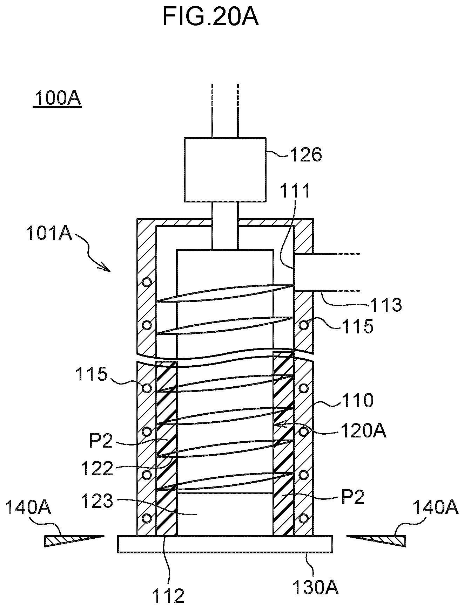

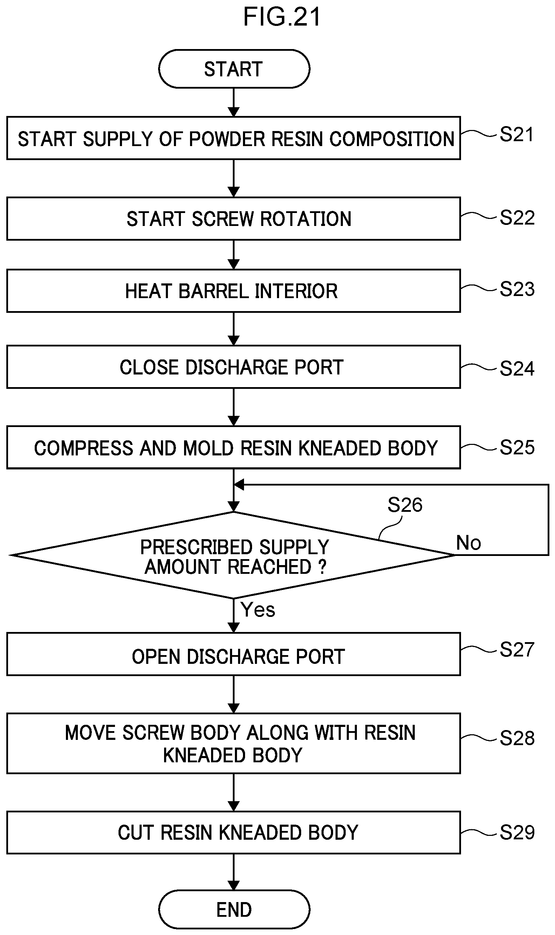

Fig. 20A to Fig. 20C are operation description diagrams showing examples of operation states of the resin molding device shown in Fig. 19. Fig. 21 is a flowchart showing an example of a resin molding method according to the exemplary embodiment of the present disclosure. Now, the resin molding method according to the present variant example is described principally with reference to Fig. 20A to Fig. 21. Below, using the resin molding device 100A described above to conduct the resin molding method according to the present variant example is described as an example.

The resin molding method according to the present exemplary embodiment includes at least: a step of starting supply of the powder resin composition P1 into the barrel 110 from the conveyance direction upstream side (corresponding to step S23 described below); a step of rotating the screw 120 that extends along the conveyance direction in the barrel 110 and conveying while kneading the powder resin composition P1; a step of heating the interior of the barrel 110 in order to fuse at least a portion of the powder resin composition P1 being conveyed in the barrel 110 and yield the resin kneaded body P2 (corresponding to step S21 described below); a step of closing the discharge port 112 provided at the conveyance direction downstream side of the barrel 110 (corresponding to step S24 described below); a step of, when a prescribed amount of the resin kneaded body P2 has been supplied into a ring-shaped cavity provided between the distal end position of the screw 120 and the barrel 110 (corresponding to step S26 described below), opening the discharge port 112 and moving the screw 120 so as to discharge the distal end portion of the screw 120 out of the barrel 110 through the discharge port 112 along with the resin kneaded body P2 surrounding the distal end portion (corresponding to step S27 and step S28 described below); and a step of cutting the resin kneaded body P2 that is discharged out of the barrel 110 through the discharge port 112 along with the screw 120 at a position near the discharge port and molding the annular resin material P (corresponding to step S29 described below). These are described in detail below.

To describe the resin molding method according to the present variant example in more detail, first, the barrel heater 115 is activated and starts heating of the interior of the barrel 110 (step S21). Then, the motor 125 is activated and starts rotation operation of the screw 120 (step S22). Correspondingly, the resin composition supply source 114 is activated and starts supplying the powder resin composition P1 to the supply port 111 of the barrel 110 (step S23). Due to the rotation operation of the screw 120 and heat from the barrel heater 115 mentioned above, the powder resin composition P1 supplied to the supply port 111 is kneaded while being conveyed, and at least a portion of the powder resin composition P1 is fused, yielding the resin kneaded body P2.

The jig 130A is activated and closes the discharge port 112 of the barrel 110 (step S24). When the resin kneaded body P2 mentioned above is conveyed in the state in which the discharge port 112 is closed, as shown in Fig. 20A, the conveyance of the resin kneaded body P2 is limited by the jig 130A and the resin kneaded body P2 stops in the ring-shaped cavity provided between the barrel 110 and the screw body 121, that is, surrounding the closing block 123. In a state in which a certain amount of the resin kneaded body P2 is stopped at the circumference of the closing block 123, when conveyance of more of the resin kneaded body P2 continues, the resin kneaded body P2 surrounding the closing block 123 is compressed and is molded by compression in an annular shape matching the shape of the cavity between the barrel 110 and the closing block 123 (step S25). The order in which steps S21 to S24 described above are carried out is not limited by the above description and may be altered as appropriate.

When an amount of the resin kneaded body P2 supplied to the circumference of the closing block 123 reaches a prescribed supply amount ("Yes" in step S26), the sequence of steps for dividing and molding the annular resin material P from the resin kneaded body P2 starts. More specifically, first, the jig 130A is activated to open the discharge port 112 of the barrel 110 (step S27). At this time, a state in which some of the resin kneaded body P2 in the barrel 110 is supported by the fin 122 and the like and retained at the circumference of the screw body 121 is maintained.

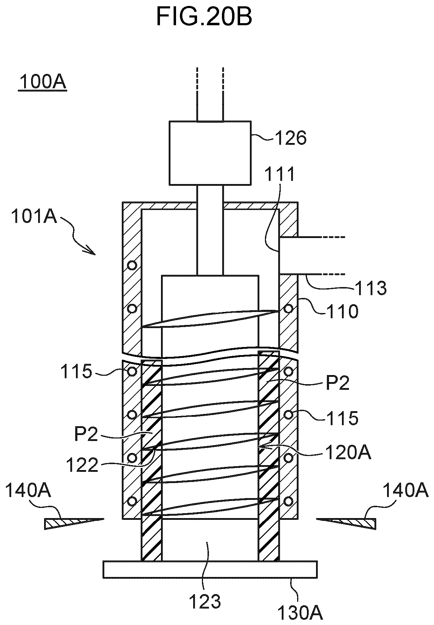

Then, the moving apparatus 126 is activated and causes the distal end of the screw body 121 to protrude out of the discharge port 112. More specifically, as shown in Fig. 20B, the moving apparatus 126 is activated and moves the closing block 123 portion of the screw body 121 and the resin kneaded body P2 retained at the circumference of the closing block 123 so as to discharge the resin kneaded body P2 out of the barrel 110 through the discharge port 112 (step S28).

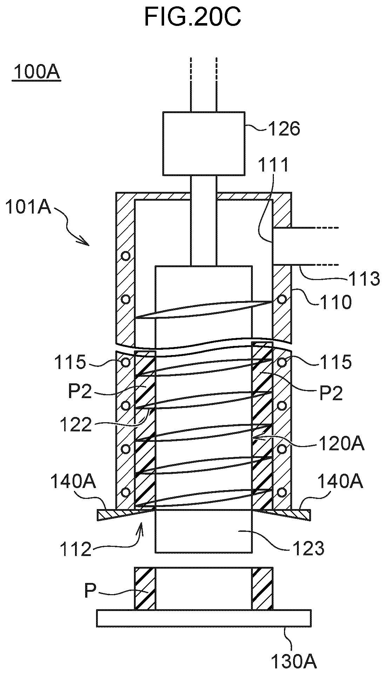

Then, as shown in Fig. 20C, the cutters 140A disposed at the position near the discharge port 112 are activated and cut the resin kneaded body P2 that has been discharged out of the discharge port 112 along with the closing block 123 by the step described above (step S29). In the present variant example, the conveyance direction length of the closing block 123 is adjusted to match an axial direction length of the annular resin material P that is to be molded, and therefore the cutting position by the cutters 140A is at substantially the same position as the discharge port 112. However, the axial direction length of the annular resin material P may be adjusted if the cutting position by the cutters 140A is adjusted.

The resin kneaded body P2 that is cut by the cutters 140A is separated from the resin kneaded body P2 retained at the circumference of the screw body 121 and is discharged as the annular resin material P. The discharged annular resin material P may be received by the jig 130A. The molding of the annular resin material P is completed by the steps described above. The annular resin material P on the jig 130A may be conveyed to the motor core manufacturing device or the like.

As described above, the resin molding device 100A and resin molding method according to the present variant example may provide the same effects as the resin molding device 100 and resin molding method according to the present exemplary embodiment described above. In addition, a degree of freedom of structure of the jig 130A is higher. Therefore, handling of the annular resin material P after the molding is easier.

The resin molding device 100A and resin molding method according to the present variant example described above may function as portions of a motor core manufacturing device and motor core manufacturing method. Structures of this motor core manufacturing device may be the same as in the motor core manufacturing devices 1, 1A, 1B and 1C illustrated for the exemplary embodiment and variant examples, apart from portions corresponding to the resin molding device 100A. Steps of this motor core manufacturing method may be the same as in the motor core manufacturing methods illustrated for the exemplary embodiment and variant examples, apart from the steps for molding the resin that are described above. Accordingly, a motor core manufacturing device and motor core manufacturing method incorporating the resin molding device 100A and resin molding method according to the present variant example are not described in detail here.

The present disclosure is not limited by the exemplary embodiment described above and numerous modifications may be embodied within a scope not departing from the gist of the present disclosure. All these modifications are to be encompassed by the technical idea of the present disclosure. In the present disclosure, there may be only one of each structural element and there may be two or more, provided no conflicts result.

All references cited in this specification, including publications, patent applications, and patents, are herein incorporated by reference to the same extent as if each reference was individually and specifically indicated to be incorporated by reference and the contents of each reference were fully set forth herein.

The use of nouns and similar designations in connection with the descriptions of this disclosure (particularly in connection with the claims below) shall be construed to cover both the singular and the plural, unless otherwise indicated herein or clearly contradicted by context. The terms "comprises", "has", "includes" and "contains" shall be construed as open-ended terms (meaning "including but not limited to"), unless otherwise indicated. The recitation of numerical ranges herein is intended merely to serve as a shorthand method for individually referring to each value falling within the range, unless otherwise indicated herein, and each value is incorporated into the specification as if it were individually recited herein. All methods described herein may be performed in any suitable order, unless otherwise indicated herein or clearly contradicted by context. Any examples or exemplary language used herein (for example, "such as"), unless otherwise asserted, are intended merely to better illustrate the disclosure and do not apply limitations to the scope of the disclosure. No language in the Description should be construed as indicating any non-claimed element as essential to the practice of the disclosure.

Preferred embodiments of the disclosure are described in this Description, including the best mode known to the inventors for carrying out the disclosure. Variations of these preferred embodiments will become apparent to those skilled in the art upon reading the above descriptions. The inventors expect that skilled practitioners will apply such variations as appropriate, and intend that the disclosure will be embodied otherwise than as specifically described herein. Accordingly, this disclosure includes all modifications and equivalents of the subject matter recited in the claims appended hereto as permitted by applicable law. Moreover, the disclosure encompasses any combination of the above-described elements in all variations thereof unless otherwise indicated in this Description or clearly contradicted by context.

## Claims

1. A resin molding device, comprising:
an extrusion conveyance path that allows conveyance of a powder resin composition in a conveyance direction, the powder resin composition being supplied to an upstream side in the conveyance direction and including a thermosetting resin;
a screw in the extrusion conveyance path, the screw including a screw body and a fin, the screw body extending along the conveyance direction with a prescribed gap between the screw body and an inner wall surface of the extrusion conveyance path, and the fin being formed at an outer peripheral surface of the screw body;
a molding device-side heater that is capable of heating the powder resin composition being conveyed along the extrusion conveyance path;
a rotation device that rotates the screw in order to knead the powder resin composition while conveying the powder resin composition in the conveyance direction and to yield a resin kneaded body; and
a jig that receives an annular resin material made of the resin kneaded body, which is discharged from a discharge port provided at a downstream side, in the conveyance direction, of the extrusion conveyance path.

2. The resin molding device according to claim 1, further comprising a cutting device capable of cutting the resin kneaded body discharged from the discharge port of the extrusion conveyance path.

3. The resin molding device according to claim 1, wherein the jig comprises a ring-shaped hole portion that is connectable to the discharge port.

4. The resin molding device according to claim 3, further comprising a cap body capable of closing off an end portion at a downstream side, in the conveyance direction, of the ring-shaped hole portion.

5. The resin molding device according to claim 3, further comprising a press device capable of pressurizing the annular resin material accommodated in the ring-shaped hole portion from a side thereof at which one end portion of the ring-shaped hole portion is disposed.

6. The resin molding device according to claim 3, wherein a plurality of projections are formed at at least one of an inner side interior wall surface or an outer side interior wall surface of the ring-shaped hole portion, the projections projecting in directions intersecting with the conveyance direction and extending in the conveyance direction.

7. The resin molding device according to claim 1, further comprising a diameter changing jig that includes:
a ring-shaped first aperture portion that can be communicated with the discharge port of the extrusion conveyance path;
a ring-shaped second aperture portion, having at least one of an outer diameter or an inner diameter that differs from the first aperture portion; and
a communicating passage that connects the first aperture portion with the second aperture portion.

8. The resin molding device according to claim 1, wherein:
a leading end portion of the screw body is configured by a closing block at which the fin is not provided, and
the resin molding device further includes a moving device that moves the screw body along the conveyance direction.

9. A motor core manufacturing device, comprising:
a resin molding device that is capable of molding an annular resin material;
a mold that is capable of retaining a motor core, the motor core including a plurality of resin fill sections provided in a ring shape at a prescribed interval;
a ring-shaped chamber that is communicated with a resin fill passage formed in the mold, an end section of the resin fill passage being communicable with each of the plurality of resin fill sections, and the chamber being capable of accommodating the annular resin material therein;
a plunger that is movable within the ring-shaped chamber; and
manufacturing device-side heaters disposed in the mold and at the outside circumference of the ring-shaped chamber, wherein the resin molding device includes:
an extrusion conveyance path that allows conveyance of a powder resin composition in a conveyance direction, the powder resin composition being supplied to an upstream side in the conveyance direction and including a thermosetting resin;
a screw in the extrusion conveyance path, the screw including a screw body and a fin, the screw body extending along the conveyance direction with a prescribed gap between the screw body and an inner wall surface of the extrusion conveyance path, and the fin being formed at an outer peripheral surface of the screw body;
a molding device-side heater that is capable of heating the powder resin composition being conveyed along the extrusion conveyance path;
a rotation device that rotates the screw in order to knead the powder resin composition while conveying the powder resin composition in the conveyance direction and to yield a resin kneaded body; and
a jig that receives the annular resin material, the annular resin material being made of the resin kneaded body, which is discharged from a discharge port provided at a downstream side, in the conveyance direction, of the extrusion conveyance path.

10. The motor core manufacturing device according to claim 9, wherein the ring-shaped chamber is capable of accommodating the annular resin material and the jig supporting the annular resin material.

11. The motor core manufacturing device according to claim 9, wherein:
the jig includes a ring-shaped hole portion that is connectable to the discharge port,
the ring-shaped chamber is capable of accommodating the annular resin material; the jig, the jig accommodating the annular resin material in the ring-shaped hole portion; and at least a portion of an extrusion ring, a distal end portion of which is fitted into the chamber from a side thereof at which one end portion of the ring-shaped hole portion of the jig is disposed, and
the extrusion ring functions as a portion of the plunger.

12. The motor core manufacturing device according to claim 9, wherein a plurality of projections are formed at at least one of an inner side interior wall surface or an outer side interior wall surface of the ring-shaped chamber, the projections projecting in directions intersecting the conveyance direction and extending in the conveyance direction, and the projections being formed at positions of the motor core disposed in the mold at which the resin fill sections are not provided.

13. A resin molding method, comprising:
starting supply of a powder resin composition into an extrusion conveyance path from an upstream side in a conveyance direction, the powder resin composition including a thermosetting resin;
rotating a screw that extends along the conveyance direction in the extrusion conveyance path and kneading the powder resin composition while conveying the powder resin composition;
heating an interior of the extrusion conveyance path in order to fuse at least a portion of the powder resin composition being conveyed in the extrusion conveyance path and to yield a resin kneaded body;
connecting one end of a ring-shaped hole portion of a jig with a discharge port, the discharge port being provided at a downstream side, in the conveyance direction, of the extrusion conveyance path, and the jig including the ring-shaped hole portion;
supplying the resin kneaded body through the discharge port into the ring-shaped hole portion; and,
when a prescribed amount of the resin kneaded body has been supplied into the ring-shaped hole portion, cutting the resin kneaded body between the discharge port of the extrusion conveyance path and the ring-shaped hole portion and molding an annular resin material.

14. The resin molding method according to claim 13, further comprising pressurizing and compressing the annular resin material in the ring-shaped hole portion in a direction along the conveyance direction.

15. The resin molding method according to claim 13, further comprising pressurizing the annular resin material in the ring-shaped hole portion in a direction along the conveyance direction and extruding the annular resin material outward from the jig.

16. A resin molding method, comprising:
starting supply of a powder resin composition into an extrusion conveyance path from an upstream side in a conveyance direction, the powder resin composition including a thermosetting resin;
rotating a screw that extends along the conveyance direction in the extrusion conveyance path and kneading the powder resin composition while conveying the powder resin composition;
heating an interior of the extrusion conveyance path in order to fuse at least a portion of the powder resin composition being conveyed in the extrusion conveyance path and to yield a resin kneaded body;
closing a discharge port provided at a downstream side, in the conveyance direction, of the extrusion conveyance path;
when a prescribed amount of the resin kneaded body has been supplied into a ring-shaped cavity provided between a distal end position of the screw and the extrusion conveyance path, opening the discharge port and moving the screw so as to discharge a distal end portion of the screw through the discharge port together with the resin kneaded body surrounding the distal end portion; and
cutting the resin kneaded body that has been discharged from the extrusion conveyance path through the discharge port together with the screw at a position in a vicinity of the discharge port and molding an annular resin material.

17. A motor core manufacturing method, comprising:
starting supply of a powder resin composition into an extrusion conveyance path from an upstream side in a conveyance direction, the powder resin composition including a thermosetting resin;
rotating a screw that extends along the conveyance direction in the extrusion conveyance path and kneading the powder resin composition while conveying the powder resin composition;
heating an interior of the extrusion conveyance path in order to fuse at least a portion of the powder resin composition being conveyed in the extrusion conveyance path and to yield a resin kneaded body;
connecting one end of a ring-shaped hole portion of a jig with a discharge port, the discharge port being provided at a downstream side, in the conveyance direction, of the extrusion conveyance path, and the jig including the ring-shaped hole portion;
supplying the resin kneaded body through the discharge port into the ring-shaped hole portion;
when a prescribed amount of the resin kneaded body has been supplied into the ring-shaped hole portion, cutting the resin kneaded body between the discharge port of the extrusion conveyance path and the ring-shaped hole portion and molding an annular resin material;
charging the molded annular resin material into a ring-shaped chamber;
retaining a motor core including a plurality of resin fill sections in a mold such that an end section of a resin fill passage is communicated with the plurality of resin fill sections, the resin fill passage being formed in the mold and being communicated with the ring-shaped chamber, and the plurality of resin fill sections being provided in a ring shape at a prescribed interval;
heating and softening the annular resin material in the ring-shaped chamber;
activating a plunger that is movable within the ring-shaped chamber and filling the plurality of resin fill sections with a soft resin formed of the annular resin material softened in the ring-shaped chamber; and
curing the soft resin that has been filled into the plurality of resin fill sections.

18. The motor core manufacturing method according to claim 17, wherein the charging the molded annular resin material into the ring-shaped chamber includes charging the annular resin material and the jig into the ring-shaped chamber, the jig accommodating the annular resin material therein.

19. The motor core manufacturing method according to claim 17, wherein:
the charging the molded annular resin material into the ring-shaped chamber includes charging: the annular resin material; the jig, the jig accommodating the annular resin material therein; and an extrusion ring, a distal end portion of which is fitted into the chamber from a side thereof at which one end portion of the ring-shaped hole portion of the jig is disposed, and
the extrusion ring is a portion of the plunger and operates to fill the plurality of resin fill sections with the soft resin.

20. A motor core manufacturing method, comprising:
starting supply of a powder resin composition into an extrusion conveyance path from an upstream side in a conveyance direction, the powder resin composition including a thermosetting resin;
rotating a screw that extends along the conveyance direction in the extrusion conveyance path and kneading the powder resin composition while conveying the powder resin composition;
heating an interior of the extrusion conveyance path in order to fuse at least a portion of the powder resin composition being conveyed in the extrusion conveyance path and to yield a resin kneaded body;
closing a discharge port provided at a downstream side, in the conveyance direction, of the extrusion conveyance path;
when a prescribed amount of the resin kneaded body has been supplied into a ring-shaped cavity provided between a distal end position of the screw and the extrusion conveyance path, opening the discharge port and moving the screw so as to discharge a distal end portion of the screw through the discharge port together with the resin kneaded body surrounding the distal end portion;
cutting the resin kneaded body that has been discharged from the extrusion conveyance path through the discharge port together with the screw at a position near the discharge port for molding an annular resin material;
charging the molded annular resin material into a ring-shaped chamber;
retaining a motor core including a plurality of resin fill sections in a mold such that an end section of a resin fill passage is communicated with the plurality of resin fill sections, the resin fill passage being formed in the mold and being communicated with the ring-shaped chamber, and the plurality of resin fill sections being provided in a ring shape at a prescribed interval;
heating and softening the annular resin material in the ring-shaped chamber;
activating a plunger that is movable within the ring-shaped chamber and filling the plurality of resin fill sections with a soft resin formed of the annular resin material softened in the ring-shaped chamber; and
curing the soft resin that has been filled into the plurality of resin fill sections.
